# EUROPEAN PATENT SPECIFICATION

(11) **EP 2 136 994 B1**
(45) Date of publication and mention of the grant of the patent: **22.08.2018**
(21) Application number: 08744955.9
(22) Date of filing: 02.04.2008
(51) Int. Cl.: B32B 37/10, B32B 5/02, B32B 7/12, B32B 27/12, B32B 37/12, B32B 37/20, D06N 7/00

(54) **HOT FILM LAMINATION (VACUUM ASSISTED) FOR CARPET BACKING APPLICATIONS**
HEISSFILMLAMINIERUNG (VAKUUMUNTERSTÜTZT) FÜR TEPPICHTRÄGERANWENDUNGEN
STRATIFICATION À CHAUD DE FILM (ASSISTÉE PAR LE VIDE) POUR DES APPLICATIONS DE SUPPORT DE TAPIS

(30) Priority: 03.04.2007 US 921589 P
(43) Date of publication of application: 30.12.2009
(73) Proprietor: Dow Global Technologies LLC, Midland, MI 48674 (US)
(72) Inventor: CHEREAU, Loic, Eric, CH-8135 Zurich (CH); PRIETO, Miguel, A., CH-8805 Richterswil (CH); YVON, Emmanuelle, Christine, CH-8820 Zurich (CH); SANDKUEHLER, Peter, E-43003 Tarragona (ES)
(74) Representative: Boult Wade Tennant LLP
(86) International application number: PCT/US2008/059161
(87) International publication number: WO 2008/124449

(56) References cited:
- EP-A- 1 484 173
- GB-A- 1 364 455
- GB-A- 2 311 247
- US-A- 4 740 417
- US-A- 5 225 140
- US-A- 5 536 551
- US-A1- 2004 062 904
- US-B1- 7 018 492

## Description

### BACKGROUND OF DISCLOSURE

### Field of the Disclosure

Embodiments disclosed herein relate generally to coating processes for porous substrates. In another aspect, embodiments disclosed herein relate to carpet lamination processes. In a more specific aspect, embodiments disclosed herein relate to a hot film, vacuum assisted lamination process. In another aspect, embodiments disclosed herein relate to processes for the application of polyolefin adhesives and backings to a primarily polyolefin griege good. In another aspect, embodiments disclosed herein relate to finished carpet having improved tuft lock.

### Background

Tufted goods, including carpeting and artificial turf, are manufactured by tufting yarns into a primary backing. The basic manufacturing approach to the commercial production of tufted carpeting is to start with a woven scrim or primary carpet backing and to feed this into a tufting machine or a loom. The carpet face fiber is needled through and embedded in the primary carpet backing thus forming tufted backings or griege goods. The base of each tuft typically extends through the primary backing and is exposed on the bottom surface of the primary backing. Tufted carpet and a process for preparing tufted carpet are described in, for example, U.S. Patent No. 5,714,224.

Tufting usually is accomplished by inserting reciprocating needles threaded with yarn into the primary backing to form tufts of yarn. Loopers or hooks, typically working in timed relationship with the needles, are located such that the loopers are positioned just above the needle eye when the needles are at an extreme point in their stroke through the backing fabric. When the needles reach that point, yarn is picked up from the needles by the loopers and held briefly. Loops or tufts of yarn result from passage of the needles back through the primary backing. This process typically is repeated as the loops move away from the loopers due to advancement of the backing through the needling apparatus. If desired, the loops can be cut to form a cut pile, for example, by using a looper and knife combination in the tufting process to cut the loops. Alternatively, the loops can remain uncut. The tufts of yarn inserted in the tufting process are usually held in place by untwisting of the yarn as well as shrinkage of the backing.

Tufting is then followed by washing and drying the griege goods, and then subjecting the griege goods to finishing operations, which may include applying adhesives or secondary backings to the backside of the tufted primary backing. Griege goods are typically backed with an adhesive coating in order to secure the tufts, or face fibers, to the primary backing. The backside or stitched surface of the backing may be coated with an adhesive, such as a natural or synthetic rubber, resin latex, an emulsion, or a hot melt adhesive, to enhance locking or anchoring of tufts to the backing. Use of such adhesives may also improve the dimensional stability of the tufted carpet, resulting in more durable carpets of improved skid and slip resistance. Low cost carpet often receives only a latex adhesive coating as the backing.

Higher cost carpet often receives both a secondary backing and a latex adhesive coating. Generally, the tufted carpet is further stabilized in the finishing operation by laminating a secondary backing, for example a thermoplastic film or a woven or non-woven fabric made from polypropylene, polyethylene, or ethylene-propylene copolymers, or natural fibers such as jute, to the tufted primary backing. The adhesive used in the finishing operation bonds the primary backing to the secondary backing.

The face fiber or yarn used in forming the pile of a tufted carpet is typically made of any one of a number of types of fiber, including nylons, acrylics, polypropylenes, polyethylenes, polyamides, polyesters, wool, cotton and rayon.

Primary backings for tufted pile carpets are typically woven or non-woven fabrics made of one or more natural or synthetic fibers or yarns, such as jute, wool, polypropylene, polyethylene, polyamides, polyesters, and rayon. Films of synthetic materials, such as polypropylene, polyethylene and ethylene-propylene copolymers may also be used to form the primary backing.

Likewise, secondary backings for tufted pile carpets are typically woven or non-woven fabrics made of one or more natural or synthetic fibers or yarns. Secondary backings for tufted pile carpets may include open weave or leno weave, i.e., tape yarn in the warp direction and spun staple fiber in the fill direction.

The application of latex adhesive coatings, for example, involves preparing griege goods by stitching a primary carpet backing material with face fiber in a manner so as to form on the top surface of the material a pile composed of numerous closely spaced, up-standing loops of yarn. Thereafter, the bottom surface of the thus formed griege goods is coated with a latex polymer binder, generally applied in the form of an aqueous dispersion, such as styrene-butadiene copolymer, acrylic, vinylic, or other common aqueous latex dispersions. The coated griege goods are then passed through an oven to dry the latex adhesive coating, bonding the face fibers to the primary backing.

If desired, a secondary backing may be bonded to the undersurface of the primary backing. To produce tufted carpets with a secondary backing, the bottom surface of the griege goods is coated with a latex polymer binder. Then, the secondary backing is applied to the coated bottom surface and the resulting structure is passed through an oven to dry the latex adhesive coating to bond the secondary backing to the griege goods.

The above-described method for making carpet is used in a majority of carpet processes in the United States. This carpet-making method has disadvantages in that it requires a special coating device together with a long hot air drying unit. The drying step increases the cost of the carpet, limits production speed, requires a large capital investment on equipment, and requires a large area to place the coating and drying devices. Furthermore, latex adhesive compositions may generate gases that may be the cause of headaches, watery eyes, breathing difficulties, and nausea, especially when used in tightly sealed buildings. In addition, overheating of the carpet may occur during drying of the latex which in turn may affect the shade of the carpet.

Consequently, carpet manufacturers have been attempting to develop a new approach for the preparation of tufted carpets. One approach is the preparation of tufted carpets with a hot-melt adhesive composition instead of a latex composition. Hot-melt adhesives are amorphous polymers that soften and flow sufficiently to wet and penetrate the backing surfaces and tuft stitches of carpets upon application of sufficient heat. Furthermore, hot-melt adhesives tend to adhere or stick to the backing surfaces and/or tuft stitches.

By the use of hot-melt adhesive, the necessity of drying the composition after application is eliminated, and further, when a secondary backing material is desired, the secondary backing may be applied directly after the hot-melt composition is applied, with no necessity for a drying step.

Application of a hot-melt composition is generally accomplished by passing the bottom surface of the griege goods over an applicator roll positioned in a reservoir containing the hot-melt composition in a molten state. A doctor blade is ordinarily employed to control the amount of adhesive that is transferred from the application roll to the bottom surface of the structure. After application of the hot-melt composition to the bottom surface of the griege goods, and prior to cooling, the secondary backing, if desired, is brought into contact with the bottom surface, and the resulting structure is then passed through nip rolls and heated.

In carpet lamination processes, basic requirements for adhesives include the ability to bond strongly to the primary backing, the tuft stitches protruding through its backside, and the secondary backing. Such compositions are generally amorphous or substantially non-crystalline due to the adhesive properties of such polymers. Activation temperature of a hot melt adhesive, that is, the temperature at which the adhesive softens and flows sufficiently to wet and penetrate the backing surfaces and tuft stitches, must be below the temperature at which the backing and face yarns melt or suffer other damage due to heating, for example, relaxation of oriented polyolefin yarns in the backings. Adhesives also must have low enough viscosities at temperatures employed in finishing to achieve good wetting of the backings and sufficient encapsulation of tuft stitches to make the tuft yarns resistant to pull-out, pilling, and fuzzing. In addition, for commercial practice, the economics of a carpet manufacturing process using hot melt adhesive must be at least as good as those of conventional latex lamination techniques which remain the dominant lamination process in commercial carpet manufacture.

A number of hot-melt adhesives and processes using the hot-melt adhesive have been proposed for use in carpet lamination. For example, U.S. Patent No. 3,551,231 discloses a hot-melt adhesive carpet lamination process in which molten adhesive consisting of an ethylene-vinyl acetate copolymer and, optionally, waxes (*e.g.,* micro crystalline and polyethylene waxes), fillers (*e.g.,* calcium carbonate), resin extenders (*e.g.,* dicyclopentadiene alkylation polymers), and antioxidants are applied to a tufted primary backing, and then a secondary backing is contacted with the molten adhesive under pressure after which the assembly is cooled to solidify the adhesive. Other patents that disclose various hot-melt compositions used in the manufacture of carpet include U.S. Pat. Nos. 4,875,954, 4,844,765, 4,576,665, 4,522,857, RE 31,826, 3,940,525, 3,676,280, 3,900,361, 3,537,946, 3,583,936, 3,390,035, and British patent publication 971,958.

As disclosed in such patents, an adhesive in molten form is applied to a backing material. Another backing material may be brought into contact with the adhesive under pressure, melting, and subsequent cooling of the adhesive serving to bond the backing materials. Application of molten adhesive typically is performed using applicator rolls, such as those used in latex lamination processes, which pass through a bath of molten adhesive or by extrusion of molten adhesive onto a backing. The large, heated vessels or extruders required for handling and application of hot melt adhesives in molten form are not needed in latex lamination processes; accordingly, conversion of conventional latex processes to use of hot melt adhesives in molten form can require substantial capital investment.

U.S. Patent Application Publication No. 20060076100 discloses a single pass process for applying a hot melt adhesive to a griege good. Additionally, as described in the '100 publication, several other patents teach other methods to produce finished broadloom carpet using hot melt adhesives. For example, U.S. App. No. 2003/0211280 provides a method of making a carpet comprising a griege carpet and an adhesive backing material. The adhesive backing material is applied to the griege carpet by extrusion coating and at least one additional step selected from (a) preheating the griege good prior to the application of the adhesive backing material, (b) subjecting the adhesive backing material to a vacuum to draw the adhesive backing material onto the back side of the primary backing material, (c) subjecting the adhesive backing material to a positive air pressure device in addition to nip roll pressure to force the adhesive backing material onto the back side of the primary backing material, and (d) heat soaking the carpet after application of the adhesive backing material onto the back side of the primary backing material.

U.S. Patent Application Publication No. 20050266205 discloses use or polyurethane to anneal a secondary backing to a griege good. The polyurethane monomers are applied to the primary backing, where the polyurethane is puddle between two rollers that coat a layer of polyurethane onto the griege good. A vacuum, blower, or ultrasonic system may be used to increase the penetration of the monomers into the griege good.

EP1752506A1 discloses a method for providing the back of a web of carpet or artificial turf with a coating. The web of the carpet passes through a preheating station and then runs along the spray aperture of a spray head of a hot melt unit, where a hot melt is applied as a coating to the back of a got web of carpet. The web of carpet is then conveyed through an after-heating station. Both in the preheating station and in the after-heating station, air is forced or sucked through the carpet transversely to the plane of the carpet.

While the hot-melt compositions and processes are considerably simpler than the latex process, the preparation of carpets of non-uniform quality has, at times, been encountered. Specifically, such carpets using hot-melt adhesives cannot, with reproducible consistency, be prepared with high scrim bonds (force required to remove the secondary backing from the finished carpet), high tuft pull strength (force required to pull one of the tufts out of the carpet), and high fuzz resistance (an indication of the individual carpet yarns to fuzz and form pills). Thus, while such hot-melt compositions are appealing from a standpoint of cost, speed, and safety, some difficulties have been encountered in preparing completely satisfactory carpet. See, for example, U.S. Patent No. 3,551,231.

Another problem with hot melt adhesive carpet lamination methods has been ineffective distribution of adhesive into the secondary backing, rather than into face yarn tuft stitches on the underside of the primary backing. This occurs because the secondary backing generally heats more rapidly than the primary backing and tuft stitches during the lamination process either as a result of direct contact between the secondary backing and the heat source or heated surfaces in the process or the thermal insulating effect of the tufts on the primary backing or a combination of these factors. In turn, the hot melt adhesive activates more rapidly in the vicinity of the secondary backing such that the adhesive tends to flow toward that backing in preference to the primary backing. This preferential flow toward the secondary backing may be enhanced when that backing is more porous than the primary backing, for example when the primary backing is tightly woven or has a high density of tuft stitches and the secondary backing is loosely woven. Such a distribution of the hot melt adhesive results in incomplete tuft encapsulation which, in turn, results in poor carpet wear characteristics. Delamination strength and tuft bind strength also are sacrificed and adhesive is effectively wasted due to ineffective distribution of adhesive within the structure.

From U.S. Patent No. 3,684,600, it is known to apply a low viscosity pre-coat composition in molten or solution form to a primary backing prior to back-coating with hot melt adhesive. The pre-coat is used in an amount sufficient to bond the tuft stitch fibers, thereby enhancing bonding of the primary and secondary backings and yielding fuzz-resistant carpets. A variety of pre-coat adhesives is disclosed including, for example, polyethylene, polypropylene, polybutene, polystyrene, polyesters and ethylene-vinyl acetate copolymers. A pre-coat blend of ethylene-vinyl acetate copolymer with waxes and a resin mixture of polyethylene, microcrystalline wax, alkyl aromatic thermoplastic resin and unsaturated aliphatic thermoplastic resin are also disclosed. U.S. Patent No. 4,552,794 also discloses pre-coat compositions for use in carpet lamination.

While pre-coat hot melt adhesives have been proposed to improve tuft stitch encapsulation, application of pre-coats in molten form creates additional expense and complexity in the lamination process by requiring additional materials, process steps, and equipment.

As an alternative to carpet lamination processes in which hot melt adhesives are applied in molten form, U.S. Patent No. 3,734,800 discloses forming hot melt polymers or other thermoplastics into continuous sheet or film and directing the same between primary and secondary backings, heating the backings and adhesive in contact to melt the adhesive and then solidifying the adhesive to form a high strength laminate. According to the '800 patent, advantages of the process reside in elimination of the need for liquids in the lamination process and ability to use existing latex lamination ovens for melting the adhesive.

U.S. Patent No. 6,316,088 discloses application of a hot melt adhesive dispersion onto a base sheet. The dispersion may be applied via spray coating, and a vacuum may be pulled across the base sheet (and conveyor belt) during the coating process.

U.S. Patent No. 3,734,812 discloses use of adhesive films to laminate unwoven tapes for other applications. Thermoplastic films, such as low density polyethylene of low molecular weight, ethylene-vinyl acetate copolymer, ethylene acrylamide copolymer, and polypropylene, to laminate stretched, unwoven tapes of polymeric materials may be used to form perforated structures useful for protecting agricultural products from animals, birds and insects, for fishing, as a curtain or upholstery material or a bag for vegetables, cereals, or powders.

U.S. Patent No. 4,434,261 discloses extrudable, self-supporting hot melt adhesive sheets containing ethylene-vinyl acetate or other ethylene copolymers, certain plasticizers, fillers, and other additives for use in laminating materials such as spun bonded polyester and polypropylene. However, use in carpet manufacture is not disclosed.

U.S. Patent Application Publication No. 20050266206 and the several related family members (U.S. Patent Application Publication Nos. 20040202817, 20040079467, 20030211280, 20020134486, and PCT Publication Nos. WO1998038376, 1998038375, and 1998038374) disclose a process for extrusion coating a griege good with an adhesive backing material. A nip roll may be equipped with a vacuum slot to draw a vacuum across about 17 percent of the roll circumference.

Carpets having fluid barriers are described in U.S. Patent No. 5,612,113. These carpets have a primary backing into which tufted yarn is stitched, a secondary backing to provide dimensional stability, and a thin film of a material which is impervious to spills, with the film being bonded to either the primary backing or the secondary backing by an adhesive which provides an adequate bond and is insoluble to spilled fluids. Suitable materials for the thin film include polyethylene, polypropylene, polyurethane, polyester, polyvinylchloride (PVC), combinations thereof and similar thermoplastic materials which may be surface treated, as well as composite structures formed from laminates of these fibers with non-woven or woven fibers and either with or without reinforcing fibers. Corona treatment of the film on one side is broadly disclosed as possibly being sufficient to render the film bondable to the backing.

U.S. Patent No. 7,056,407 describes tufted goods (including carpets and artificial turf) which can be made without a secondary backing. In general, secondary backings have been necessary in carpets and in processes for producing carpets to provide dimensional stability. As described therein, corona-treatment of a flexible film that is contacted or laminated to a polyurethane pre-coated griege good or to a foam layer applied to a pre-coated griege good creates a bond that is strong enough to render the resultant cured carpeting article dimensionally stable, with no secondary backing. The delamination strength of these cured tufted goods exceeds that of conventional tufted goods. It is possible to include secondary backings in the tufted goods, but this generally results in increased costs of the processes and the resultant products, without further improvements in properties.

U.S. Patent No. 5,221,394 discloses a method for manufacturing backed, pressure-adherent industrial carpeting. This carpeting comprises a backing film and an adhesive on one side of the backing film. The other side of the backing film is heat laminated to a web of carpeting to reinforce the carpeting and provide it with an adhesive. Corona discharge of the backing film is disclosed, and heat lamination is used to bond the fibers and the backing.

Tufted products having multi-layer primary backings are disclosed in U.S. Patent No. 5,445,860. These tufted products are made by, for example, tufting pile yarn fibers into a tufting backing which is composed of a first backing layer, a second backing layer and an elastomer sandwiched between the first and secondary backings. It is also possible for the tufting backing to be composed of only a backing layer and an elastomer adhered to the backing layer. Thus, the second backing layer is optional. When a second backing layer is present, the elastomer is sandwiched between the first and second backing layers. The elastomer may be applied as a solid sheet of elastomer, or it may be melted and applied. After forming the multi-layer backing, pile yarn fibers are then tufted through the backing and elastomer layers. The solid sheet of elastomer is heated at some point to allow the elastomer to flow in and around the pile yarn fibers. Once the elastomer layer is cooled, the pile yarn fibers are bonded to the tufting backing. It is further disclosed that the bonding of the elastomer to the first backing layer may be improved by treating the first backing layer with a corona discharge or gas flame. Bonding between the first backing layer and the elastomer may also be improved by suctioning the elastomer to the first backing layer with, for example, a vacuum.

U.S. Patent No. 5,240,530 discloses carpet including a primary backing having tufts of synthetic carpet fibers protruding from a top surface and, optionally, a secondary backing, with an extruded sheet of an isotactic polyolefin polymer between and integrally fused to a bottom surface of the primary backing and an upper surface of the secondary backing. The process disclosed for manufacturing the carpet includes contacting the extruded sheet with the primary backing and, optionally, the secondary backing, at a temperature sufficiently high to integrally fuse the extruded sheet to the respective backing.

U.S. Patent No. 6,860,953 discloses a process for using recycled plastics as a carpet backing layer. The recycled material is combined with a blowing agent and extruded to form a backing sheet at a temperature less than the decomposition temperature of the blowing agent. Following adhesion to a floor covering, the backing sheet is heated to activate the blowing agent, causing the backing sheet to expand and form a cushioned backing layer.

U.S. Patent No. 7,018,492 and related patent family member U.S. Patent Application Publication No. 20060204711 disclose processes for making carpets comprising applying to a stitched side of a tufted backing a liquid stitch bind composition comprising an organic polymer component, removing a liquid component of the composition to bond filaments of the stitches and bonding stitches and one or more backings with a thermoplastic binder that is melted or applied as a melt in contact with the stitched side and the backing or backings and solidified.

U.S. Patent No. 7,026,031 discloses a process for the production of artificial turf where fibers are treated via corona discharge, tufted into a primary backing to form griege goods, and a pre-coat is applied to the back surface of the griege goods. Suitable fibers are polyolefins, and suitable pre-coats are reactive polyurethane mixtures. The fibers may be treated by corona discharge either before they are tufted into the primary backing to form the griege good or after they are tufted into the primary backing. The pre-coat is attached by its face surface to the back surface of the griege good.

Regarding artificial turf, polyurethanes have largely replaced SBR latex as the backing material of choice for demanding outdoor applications such as athletic turf due to the inherent resistance of polyurethane against water degradation and generally superior durability. Nylon with its polar characteristics bonds quite well with pre-coats made with polyurethanes. Further, there has been a recent trend in the industry to move towards using polyolefin fibers or tape, such as polyethylene, because these materials are considerably less abrasive than nylon, and thus reduce the incidence of skin scraping injuries. These polyolefins are non-polar and thus bonding to polyurethane pre-coats is somewhat diminished resulting in lower tuft binds compared to that of nylon turf.

Another recent trend in the industry is for production of carpet that may be recycled. Use of latex adhesives or incompatible polymers during the manufacturing process may result in large quantities of carpet trimmings and scrap produced during the manufacture of carpet and used carpet being sent to landfills, at substantial cost.

EP-A-1,484,173 discloses a method of preparing an article of manufacture, such as interior and exterior automotive body panels and components, which includes bringing at least a portion of a heated thermoplastic sheet into contact with at least a portion of the first surface of a support having a plurality of perforations. A vacuum is formed on the second surface of the support, and portions of the heated thermoplastic sheet are drawn through the perforations of the support and to the second surface of the support. Thermoplastic attachment heads are formed on the second surface side of the support from the thermoplastic material of the sheet that is drawn through the perforations.

US-B-4,740,417 discloses a vacuum molding process for adhering a porous foam-backed fabric to a thermoplastic substrate and for providing a nonplanar contour to the substrate with fabric adhered thereto. The porous, foam backed fabric is loosely positioned over a female mold. The substrate is heated sufficiently for the substrate to sag. The sagging substrate is deposited over the female mold whereby the substrate contacts the fabric around an effective mold perimeter. A vacuum applied through the female mold is transmitted through the porous foam backed fabric and attracts the sagging substrate into the mold. The attraction causes contact and adhesion of the heated substrate and the foam-backed fabric.

GB-A-1,364,455 describes a method of producing a flexible laminated sheet fabric comprising assembling together a sheet of plastics material and a textile material with an adhesive located therebetween, and applying a reduced pressure or vacuum to that side of the textile material remote from the said plastics material when the latter is in at least partially softened condition so that a suction effect is produced causing the plastics material to be drawn at least partially through the textile material to which it is to be laminated, and causing the plastics material to bond mechanically with surface fibers of the said textile material and to follow closely the contous of the latter whilst providing in the laminated product a continuous plastics layer, the said plastics layer being sufficiently transluscent to enable the textile material to be viewed therethrough.

US-A-2004/0062904 discloses a modular carpet for a motor vehicle comprising: a thermoplastic backing material that is vacuum molded to correspond to the shape of a floor in a particular motor vehicle, and a piece of tufted carpet attached to said backing material to form a molded vehicle carpet.

GB-A-2,311,247 describes an artificial turf carpet including a water-permeable backing layer to which are secured fibres which are upstanding from the backing layer to form a pile, and a water absorbent layer disposed on the side of the backing layer from which the fibres extend, the fibres passing through the water-absorbent layer.

Thus, while conventional carpet and carpet manufacturing processes are known, these carpets and manufacturing processes have inherent problems due to the compositions employed therein. Specifically, the adhesives used to adhere the tufts of face fiber to the primary backing and to adhere the secondary backing to the primary backing include compositions which require lengthy drying times thus slowing down the manufacturing process. In addition, the latex compositions may produce noxious off gases which create health hazards. Likewise, many of the hot-melt compositions conventionally employed in the
manufacture of carpet do not result in reproducible consistency regarding scrim bonds, tuft pull strength, and fuzz resistance.

Additionally, the use of conventional latex adhesives and hot-melt adhesives prevent carpet from being recycled.

Thus, there remains a need for improved carpet lamination processes that will provide tufted carpets of good bond strength between primary and secondary backings, good tuft stitch encapsulation, and tuft bind strength, especially for carpet containing primarily polyolefins.

### SUMMARY OF THE DISCLOSURE

In one aspect, embodiments disclosed herein relate to a process for laminating a porous substrate provided from a tufting manufacturing, process, the process comprising:
(a) selecting a porous substrate comprising a tufted substrate,
(b) selecting a lamination film comprising an outer adhesive polymer layer, wherein said outer adhesive polymer layer comprises an ethylene based homopolymer, copolymer, interpolymer, or multi-block interpolymer, a propylene based homopolymer, copolymer, interpolymer, or multi-block interpolymer, or combinations thereof, and wherein said outer adhesive polymer layer has a melting point temperature less than the melting point temperature of the porous substrate;
(c) disposing said lamination film comprising said outer adhesive polymer layer on a surface of said porous substrate via roller pressing;
(d) subsequently applying heat via a heat source in the presence of vacuum to said lamination film disposed on said surface of the porous substrate;
(e) thereby increasing the temperature of said lamination film to a temperature in the range of at least 5° C greater than the melting point temperature of the outer adhesive polymer layer, wherein said outer adhesive polymer layer is molten and penetrates into the tufted substrate;
(f) thereby forming a composite structure;
(g) roller pressing said composite structure thereby forming a pressed composite structure;
(h) removing heat from said pressed composite structure while applying vacuum;
(i) thereby forming said laminated substrate.

Other aspects and advantages will be apparent from the following description and the appended claims.

### BRIEF DESCRIPTION OF DRAWINGS

Figure 1 is a simplified schematic diagram of a process for coating porous or tufted substrates according to embodiments disclosed herein.
Figure 2 is a simplified schematic diagram of another process for coating porous or tufted substrates according to embodiments disclosed herein.
Figure 3 is a photograph of a griege good coated with a film using heating and roller casting.
Figure 4 is a photograph of a griege good coated with a film using heating and roller casting.
Figure 5 is a photograph of a griege good coated with a film using heating, vacuum, and roller casting, according to embodiments disclosed herein.
Figure 6 graphically compares the tuft lock of the coated griege goods of Figures 3-5 and a comparative sample.

### DETAILED DESCRIPTION

In one aspect, embodiments disclosed herein relate to coating processes for porous substrates. In another aspect, embodiments disclosed herein relate to carpet lamination processes. In a more specific aspect, embodiments disclosed herein relate to a hot film, vacuum assisted lamination process. In another aspect, embodiments disclosed herein relate to processes for the application of polyolefin adhesives and backings to a primarily polyolefin griege good. In another aspect, embodiments disclosed herein relate to finished carpet having improved tuft lock.

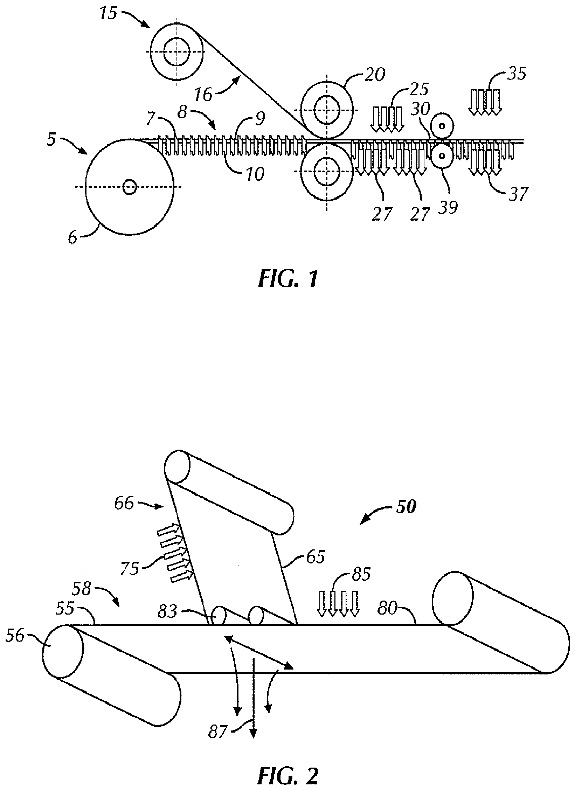

Referring now to Figure 1, a process for coating porous substrates, including tufted substrates such as carpet and artificial turf, non-wovens, wovens, porous films, textiles, canvas, and artificial leather, according to embodiments disclosed herein, is illustrated. A porous substrate 5 and a lamination film 15 are brought together between rolls 20. Porous substrate 5, which may be provided in the form of a roll of material 6 or may be provided from a tufting or carpet manufacturing process (not shown), may include tufts 7 protruding from a top surface 8 of primary backing 9. Pile 10 may extend downward from primary backing 9.

Lamination film 15 includes one or more layers (not shown), and may include one or more foam or foamable layers, as well as additives and fillers, each described in detail below. Lamination film 15, which may include one or multiple polymer layers (not shown), includes an outer adhesive polymer layer 16, having a melting temperature less than a melting temperature of porous substrate 5. Outer adhesive polymer layer 16 is brought into a contacting relationship with at least one of top surface 8 and tufts 7 between rolls 20. Heat source is then used to increase the temperature of the lamination film 15 above the melting point of the adhesive polymer layer 16.

Concurrently, a vacuum 27 is applied to increase contact of the film 15 and adhesive polymer layer 16 with backing 9 and tufts 7. For example, the vacuum 27 may suction the lamination film, or portions thereof, into the backing 9 and tufts 7. The vacuum 27 may be applied using any suitable vacuum or blower. The applied vacuum 27 may provide for penetration of the molten adhesive film layer 16 onto or between the fibers (not shown) of tufts 7 and backing 9, providing the required wetting for good adhesion (tuft lock) of the pile 10 to backing 9.

The temperature of the resulting composite structure 30 is then decreased using a cooling source 35. Cooling source 35 may include natural convection, forced convection, or other means known to those skilled in the art for decreasing the temperature of a substrate.

A vacuum is applied to maintain an increased contact between film 15 and base adhesive polymer layer 16 with backing 9 and tufts 7 throughout the cooling process. In other embodiments, composite structure 30 may be pressed between rolls 39 to further the penetration of molten film 16 onto or between the fibers of tufts 7 and backing 9. Rolls 39 may also provide dimensional stability and finishing for composite structure 30.

Referring now to Figure 2, another process for coating porous substrates, not accoprding to the invention, such as carpet, artificial turf, non-wovens, wovens, open-cell foams, textiles, canvas, and artificial leather, according to embodiments disclosed herein, is illustrated. Overall, a porous substrate 55 and a lamination film 65 may be brought together during the process 50 to form a composite structure 80. Porous substrate 55, which may be provided in the form of a roll of material 56 or may be provided from a tufting or carpet manufacturing process (not shown), may include tufts (not shown) protruding from a top surface 58 of porous substrate 55. Pile (not shown) may extend downward from porous substrate 55.

Lamination film 65 may include one or more layers (not shown) where an outer adhesive polymer layer 66, which may have a melting temperature greater or less than a melting temperature of porous substrate 55, is brought into a contacting relationship with at least one of top surface 58 and the tufts. Prior to contacting lamination film 65 and porous substrate 55, heat source 75 may be used to increase the temperature of the lamination film 65 above the melting point of the adhesive polymer layer 66. The melting of the adhesive polymer layer 66 creates a thin layer of molten polymer, after which the lamination film 65 and the porous substrate 55 may be brought into a contacting relationship, such as by using casting roll 83.

In some embodiments, concurrently with or after lamination film 65 and porous substrate 55 are brought into a contacting relationship, a vacuum 87 may be applied to maintain or increase the contact pressure between lamination film 65 and porous substrate 55. The applied vacuum 87 may provide for penetration of the molten film layer 66 onto or between components of porous substrate 55, such as the fibers (not shown) of the tufts and backing of a tufted carpet, providing the required wetting for good adhesion (tuft lock).

The temperature of the resulting composite structure 80 may then be decreased using a cooling source 85. Cooling source 85 may include natural convection, forced convection, or other means known to those skilled in the art for decreasing the temperature of a substrate. Additionally, vacuum (not shown) may be applied to maintain an increased contact between lamination film 65 (and base adhesive polymer layer 16) with porous substrate 55 throughout the cooling process.

In other embodiments, composite structure 80 may be pressed between rolls (not shown) to further the penetration of molten film 66 into porous substrate 55. The rolls may also provide dimensional stability and finishing for composite structure 80.

In alternative embodiments, a lamination film (single or multi-layered) may be applied to a porous substrate using an extrusion coating process.

In the above described processes, the strength of the bond formed between a porous substrate and a lamination film may depend upon the compatibility of the components of the lamination film with the components of the porous substrate, including the backing and the tufts. Materials useful for lamination films and porous substrates are discussed in greater detail below.

The strength of the bond formed between a porous substrate and a lamination film may also depend upon the thickness of the base adhesive polymer layer. In some embodiments, the base adhesive polymer layer thickness may range from 0.1 to 500 µm(microns) in some embodiments, and from 0.5 to 75 µm(microns) in yet other embodiments. In other embodiments, a thickness for the base adhesive polymer layer is from 0.5 to 25 µm (microns). In other embodiments, a thickness for the base adhesive polymer layer is from 0.75 to 5 µm (microns); and from 0.75 to 2 µm (microns) in yet other embodiments.

Additionally, the strength of the bond formed between a porous substrate and a lamination film may depend upon the processing conditions, such as the processing speed, the lamination temperature (*i.e.,* improved bond strength may occur at temperatures in excess of the melting point of the base adhesive polymer layer due to increased flowability of the adhesive polymer), and the applied vacuum and roll pressure (each affecting the contact and flow of the adhesive polymer into and around the substrate).

As described above, a lamination film or layer(s) thereof is heated above a melting temperature of an adhesive polymer layer (the lowest melting point polymer contained in the outer layers of the film). The adhesive layer is heated to a temperature at least 5°C above the melting temperature; at least 10°C above the melting temperature in other embodiments; and at least 20°C above the melting temperature in yet other embodiments. In yet other embodiments, the lamination film may be heated to a temperature of at least the melting point of the highest melting point polymer contained in the film. Melting points for specific polymers may vary, as described below. The films or layer(s) thereof useful in some embodiments described herein may have a melting temperature of less than 250°C; less than 200°C in other embodiments; less than 150°C in other embodiments; less than 120°C in other embodiments; less than 100°C in other embodiments; less than 90°C in other embodiments; less than 80°C in other embodiments; and less than 70°C in yet other embodiments. In other embodiments, films or layer(s) thereof may have a melting temperature of at least 40°C; at least 50°C in other embodiments.

Vacuum, as described above, is used to increase the flow of adhesive polymer into and around the substrate. The vacuum applied may depend on such factors as substrate pore size, adhesive melt viscosity, temperature, and the desired amount of flow / contact between the adhesive and the substrate, among other factors. Applied vacuum may range from a partial vacuum to a full vacuum in various embodiments.

In other embodiments, dispersions, such as polyolefin dispersions, may be disposed between the porous substrate and the lamination film. The dispersion may act as a cling layer, improving the adhesion between the components of the porous substrate, including tufts and backing, and the lamination film due to the high flow properties of the dispersion. In some embodiments, the dispersion may be applied over the full width of the porous substrate. In other embodiments, the dispersion may be applied in select areas, such as to the fiber tufts (*e.g.,* in stripes).

Heat sources that may be used with the lamination processes disclosed herein may include any type of heating that may be used to increase the temperature of a polymer. For example, heat sources may include radiant, convective, microwave, infrared, radio frequency, or conductive heating, among others. Devices known in the art for these heating methods are known to those skilled in the art. Additionally, additives that may be used to enhance the heating of or to selectively heat the base adhesive polymer layer may be used, and are known to those skilled in the art.

As described above, composite structures (laminated substrates) formed from the processes disclosed herein may include porous or tufted substrates, tufts and pile fibers, lamination films, dispersions, fillers, and additives. Each of these will now be discussed in greater detail. In some embodiments, the polymers used in each of the porous or tufted substrate, the fibers, the lamination films, and the dispersions are compatible polymers, such as polymers formed having similar primary components or backbones. As such, discussion of the components of the composite structures will begin with thermoplastic resins useful in each of the porous or tufted substrate, the fibers, the lamination films, and the dispersions.

### Thermoplastic Resin

Thermoplastic resins used herein may include olefin polymers and elastomers, and blends of various olefin polymers and/or olefin elastomers. In some embodiments, the olefin resin is a semicrystalline resin. The term "semi-crystalline" is intended to identify those resins that possess at least one endotherm when subjected to standard differential scanning calorimetry (DSC) evaluation. Some semi-crystalline polymers exhibit a DSC endotherm that exhibits a relatively gentle slope as the scanning temperature is increased past the final endotherm maximum. This reflects a polymer of broad melting range rather than a polymer having what is generally considered to be a sharp melting point. Some polymers useful in the dispersions of the disclosure have a single melting point while other polymers have more than one melting point.

In some polymers, one or more of the melting points may be sharp such that all or a portion of the polymer melts over a fairly narrow temperature range, such as a few degrees centigrade. In other embodiments, the polymer may exhibit broad melting characteristics over a range of 20°C. In yet other embodiments, the polymer may exhibit broad melting characteristics over a range of greater than 50°C.

Examples of the olefin resins that may be used in the present disclosure include homopolymers and copolymers (including elastomers) of an alpha-olefin such as ethylene, propylene, 1-butene, 3-methyl-1-butene, 4-methyl-1-pentene, 3-methyl-1-pentene, 1-heptene, 1-hexene, 1-octene, 1-decene, and 1-dodecene, as typically represented by polyethylene, polypropylene, poly-1-butene, poly-3-methyl-1-butene, poly-3-methyl-1-pentene, poly-4-methyl-1-pentene, ethylene-propylene copolymer, ethylene-1-butene copolymer, and propylene- 1-butene copolymer; copolymers (including elastomers) of an alpha-olefin with a conjugated or non-conjugated diene, as typically represented by ethylene-butadiene copolymer and ethylene-ethylidene norbornene copolymer; and polyolefins (including elastomers) such as copolymers of two or more alpha-olefins with a conjugated or non-conjugated diene, as typically represented by ethylene-propylene-butadiene copolymer, ethylene-propylene-dicyclopentadiene copolymer, ethylene-propylene-1,5-hexadiene copolymer, and ethylene-propylene-ethylidene norbornene copolymer; ethylene-vinyl compound copolymers such as ethylene-vinyl acetate copolymer, ethylene-vinyl alcohol copolymer, ethylene-vinyl chloride copolymer, ethylene acrylic acid or ethylene-(meth)acrylic acid copolymers, and ethylene-(meth)acrylate copolymer; styrenic copolymers (including elastomers) such as polystyrene, ABS, acrylonitrile-styrene copolymer, α-methylstyrene-styrene copolymer, styrene vinyl alcohol, styrene acrylates such as styrene methylacrylate, styrene butyl acrylate, styrene butyl methacrylate, and styrene butadienes and crosslinked styrene polymers; and styrene block copolymers (including elastomers) such as styrene-butadiene copolymer and hydrates thereof, and styrene-isoprene-styrene tri-block copolymer; polyvinyl compounds such as polyvinyl chloride, polyvinylidene chloride, vinyl chloride-vinylidene chloride copolymer, polymethyl acrylate, and polymethyl methacrylate; polyamides such as nylon 6, nylon 6,6, and nylon 12; thermoplastic polyesters such as polyethylene terephthalate and polybutylene terephthalate; polycarbonate and polyphenylene oxide; and glassy hydrocarbon-based resins, including poly-dicyclopentadiene polymers and related polymers (copolymers, terpolymers); saturated mono-olefins such as vinyl acetate, vinyl propionate and vinyl butyrate; vinyl esters such as esters of monocarboxylic acids, including methyl acrylate, ethyl acrylate, n-butylacrylate, isobutyl acrylate, dodecyl acrylate, n-octyl acrylate, phenyl acrylate, methyl methacrylate, ethyl methacrylate, and butyl methacrylate; acrylonitrile, methacrylonitrile, acrylamide, mixtures thereof; resins produced by ring opening metathesis and cross metathesis polymerization. Other suitable polymers include ethylene-ethyl acrylate (EEA) copolymer, ethylene-methyl methacrylate (EMMA) copolymers, ethylene-methyl acrylate (EMA) copolymers, and ethylene-butyl acrylate (EBA) copolymers. These resins may be used either alone or in combinations of two or more.

In particular embodiments, the thermoplastic resin may be a styrene-butadiene copolymer. For example, the styrene-butadiene copolymer may be provided in the form of surfactant stabilized styrene-butadiene copolymer latex, such as TYKOTE® and the DL series of styrene-butadiene copolymer latexes available from The Dow Chemical Company. For example, DL460, available from The Dow Chemical Company, has 46-49 weight percent non-volatile components, a pH of approximately 10, and a glass transition temperature of approximately 4°C.

In one particular embodiment, the thermoplastic resin may comprise an alpha-olefin interpolymer of ethylene with a comonomer comprising an alkene, such as 1-octene. The ethylene and octene copolymer may be present alone or in combination with another thermoplastic resin, such as ethylene-acrylic acid copolymer. When present together, the weight ratio between the ethylene and octene copolymer and the ethylene-acrylic acid copolymer may range from 1:10 to 10:1, such as from 3:2 to 2:3. The polymeric resin, such as the ethylene-octene copolymer, may have a crystallinity of less than 50%, such as less than 25%. In some embodiments, the crystallinity of the polymer may range from 5 to 35 percent. In other embodiments, the crystallinity may range from 7 to 20 percent.

Embodiments disclosed herein may also include a polymeric component that may include at least one multi-block olefin interpolymer. Suitable multi-block olefin interpolymers may include those described in, for example, U.S. Provisional Patent Application No. 60/818,911. The term "multi-block copolymer" or "multi-block interpolymer" refers to a polymer comprising two or more chemically distinct regions or segments (referred to as "blocks") preferably joined in a linear manner, that is, a polymer comprising chemically differentiated units which are joined end-to-end with respect to polymerized ethylenic functionality, rather than in pendent or grafted fashion. In certain embodiments, the blocks differ in the amount or type of comonomer incorporated therein, the density, the amount of crystallinity, the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property.

Other olefin interpolymers include polymers comprising monovinylidene aromatic monomers including styrene, o-methyl styrene, p-methyl styrene and t-butylstyrene. In particular, interpolymers comprising ethylene and styrene may be used. In other embodiments, copolymers comprising ethylene, styrene and a C₃-C₂₀ alpha-olefin, optionally comprising a C₄-C₂₀ diene, may be used.

Suitable non-conjugated diene monomers may include straight chain, branched chain or cyclic hydrocarbon diene having from 6 to 15 carbon atoms. Examples of suitable non-conjugated dienes include straight chain acyclic dienes, such as 1,4-hexadiene, 1,6-octadiene, 1,7-octadiene, 1,9-decadiene, branched chain acyclic dienes, such as 5-methyl-1,4-hexadiene; 3,7-dimethyl-1,6-octadiene; 3,7-dimethyl-1,7-octadiene and mixed isomers of dihydromyricene and dihydroocinene, single ring alicyclic dienes, such as 1,3-cyclopentadiene; 1,4-cyclohexadiene; 1,5-cyclooctadiene and 1,5-cyclododecadiene, and multi-ring alicyclic fused and bridged ring dienes, such as tetrahydroindene, methyl tetrahydroindene, dicyclopentadiene, bicyclo-(2,2,1)-hepta-2,5-diene; alkenyl, alkylidene, cycloalkenyl and cycloalkylidene norbornenes, such as 5-methylene-2-norbornene (MNB); 5-propenyl-2-norbornene, 5-isopropylidene-2-norbornene, 5-(4-cyclopentenyl)-2-norbornene, 5-cyclohexylidene-2-norbornene, 5-vinyl-2-norbornene, and norbornadiene. Of the dienes typically used to prepare EPDMs, the particularly preferred dienes are 1,4-hexadiene (HD), 5-ethylidene-2-norbornene (ENB), 5-vinylidene-2-norbornene (VNB), 5-methylene-2-norbornene (MNB), and dicyclopentadiene (DCPD).

One class of desirable polymers that may be used in accordance with embodiments disclosed herein includes elastomeric interpolymers of ethylene, a C₃-C₂₀ α-olefin, especially propylene, and optionally one or more diene monomers. Preferred α-olefins for use in this embodiment are designated by the formula CH₂=CHR*, where R* is a linear or branched alkyl group of from 1 to 12 carbon atoms. Examples of suitable α-olefins include propylene, isobutylene, 1-butene, 1-pentene, 1-hexene, 4-methyl-1-pentene, and 1-octene. The propylene-based polymers are generally referred to in the art as EP or EPDM polymers. Suitable dienes for use in preparing such polymers, especially multi-block EPDM type polymers, include conjugated or non-conjugated, straight or branched chain-, cyclic- or polycyclic- dienes comprising from 4 to 20 carbon atoms. Dienes may include 1,4-pentadiene, 1,4-hexadiene, 5-ethylidene-2-norbornene, dicyclopentadiene, cyclohexadiene, and 5-butylidene-2-norbornene.

Other suitable thermoplastic resins may include the esterification products of a di- or poly-carboxylic acid and a diol comprising a diphenol. These resins are illustrated in U.S. Patent No. 3,590,000. Other specific examples of resins include styrene/methacrylate copolymers, and styrene/butadiene copolymers; suspension polymerized styrene butadienes; polyester resins obtained from the reaction of bisphenol A and propylene oxide followed by the reaction of the resulting product with fumaric acid; and branched polyester resins resulting from the reaction of dimethylterephthalate, 1,3-butanediol, 1,2-propanediol, and pentaerythritol, styrene acrylates, and mixtures thereof.

Further, specific embodiments of the present disclosure may employ ethylene-based polymers, propylene-based polymers, propylene-ethylene copolymers, and styrenic copolymers as one component of a composition. Other embodiments of the present disclosure may use polyester resins, including those containing aliphatic diols such as UNOXOL 3,4 diol, available from The Dow Chemical Company (Midland, MI).

In select embodiments, the thermoplastic resin is formed from ethylene-alpha olefin copolymers or propylene-alpha olefin copolymers. In particular, in select embodiments, the thermoplastic resin includes one or more non-polar polyolefins.

In specific embodiments, polyolefins such as polypropylene, polyethylene, copolymers thereof, and blends thereof, as well as ethylene-propylene-diene terpolymers, may be used. In some embodiments, olefinic polymers may include homogeneous polymers, as described in U.S. Patent No. 3,645,992 issued to Elston; high density polyethylene (HDPE), as described in U.S. Patent No. 4,076,698 issued to Anderson; heterogeneously branched linear low density polyethylene (LLDPE); heterogeneously branched ultra low linear density polyethylene (ULDPE); homogeneously branched, linear ethylene/alpha-olefin copolymers; homogeneously branched, substantially linear ethylene/alpha-olefin polymers, which can be prepared, for example, by processes disclosed in U.S. Patent Nos. 5,272,236 and 5,278,272; and high pressure, free radical polymerized ethylene polymers and copolymers such as low density polyethylene (LDPE) or ethylene vinyl acetate polymers (EVA).

Polymer compositions, and blends thereof, described in U.S. Patent Nos. 6,566,446, 6,538,070, 6,448,341, 6,316,549, 6,111,023, 5,869,575, 5,844,045, or 5,677,383 may also be suitable in some embodiments. In some embodiments, the blends may include two different Ziegler-Natta polymers. In other embodiments, the blends may include blends of a Ziegler-Natta polymer and a metallocene polymer. In still other embodiments, the polymer used herein may be a blend of two different metallocene polymers. In other embodiments, single site catalyst polymers may be used.

In some embodiments, the polymer is a propylene-based copolymer or interpolymer. In some particular embodiments, the propylene/ethylene copolymer or interpolymer is characterized as having substantially isotactic propylene sequences. The term "substantially isotactic propylene sequences" and similar terms mean that the sequences have an isotactic triad (mm) measured by ¹³C NMR of greater than 0.85 in one embodiment; greater than 0.90 in another embodiment; greater than 0.92 in another embodiment; and greater than 0.93 in yet another embodiment. Isotactic triads are well-known in the art and are described in, for example, U.S. Patent No. 5,504,172 and WO 00/01745, which refer to the isotactic sequence in terms of a triad unit in the copolymer molecular chain determined by ¹³C NMR spectra.

The olefin polymers, copolymers, interpolymers, and multi-block interpolymers may be functionalized by incorporating at least one functional group in its polymer structure. Exemplary functional groups may include, for example, ethylenically unsaturated mono- and di-functional carboxylic acids, ethylenically unsaturated mono- and di-functional carboxylic acid anhydrides, salts thereof and esters thereof. Such functional groups may be grafted to an olefin polymer, or it may be copolymerized with ethylene and an optional additional comonomer to form an interpolymer of ethylene, the functional comonomer and optionally other comonomer(s). Means for grafting functional groups onto polyethylene are described for example in U.S. Patents Nos. 4,762,890, 4,927,888, and 4,950,541. One particularly useful functional group is maleic anhydride.

The amount of the functional group present in the functional polymer may vary. The functional group may be present in an amount of at least 1 weight percent in some embodiments; at least 5 weight percent in other embodiments; and at least 7 weight percent in yet other embodiments. The functional group may be present in an amount less than 40 weight percent in some embodiments; less than 30 weight percent in other embodiments; and less than 25 weight percent in yet other embodiments.

In other particular embodiments, the thermoplastic resin may be ethylene vinyl acetate (EVA) based polymers. In other embodiments, the thermoplastic resin may be ethylene-methyl acrylate (EMA) based polymers. In other particular embodiments, the ethylene-alpha olefin copolymer may be ethylene-butene, ethylene-hexene, or ethylene-octene copolymers or interpolymers. In other particular embodiments, the propylene-alpha olefin copolymer may be a propylene-ethylene or a propylene-ethylene-butene copolymer or interpolymer.

The thermoplastic polymer may have a crystallinity as determined by the observance of at least one endotherm when subjected to standard differential scanning calorimetry (DSC) evaluation. For ethylene-based polymers, a melt index ("MI") determined according to ASTM D1238 at 190°C (375°F) with a 2.16 kg (4.75 lb.) weight of 30 g/10 minutes or less in some embodiments; 25 g/10 minutes or less in other embodiments; 22 g/10 minutes or less in other embodiments; and 18 g/10 minutes or less in yet other embodiments. In other embodiments, ethylene-based polymers may have a melt index (MI) of 0.1 g/10 minutes or greater; 0.25 g/10 minutes or greater in other embodiments; 0.5 g/10 minutes or greater in other embodiments; and 0.75 g/10 minutes or greater in yet other embodiments.

Propylene-based polymers may have a Melt Flow Rate ("MFR") determined according to ASTM D1238 at 230°C (446°F) with a 2.16 kg (4.75 lb.) weight of 85 g/10 minutes or less in some embodiments; 70 g/10 minutes or less in other embodiments; 60 g/10 minutes or less in other embodiments; and 50 g/10 minutes or less in yet other embodiments. In other embodiments, propylene-based polymers may have a melt flow rate (MFR) of 0.25 g/10 minutes or greater; 0.7 g/10 minutes or greater in other embodiments; 1.4 g/10 minutes or greater in other embodiments; and 2 g/10 minutes or greater in yet other embodiments.

Ethylene-based polymers may have a density of 0.845 g/cc or greater in some embodiments; 0.85 g/cc or greater in other embodiments; 0.855 g/cc or greater in other embodiments; and 0.86 g/cc or greater in yet other embodiments. In other embodiments, ethylene-based polymers may have a density of 0.97 g/cc or less; 0.96 g/cc or less in other embodiments; 0.955 g/cc or less in other embodiments; and 0.95 g/cc or less in yet other embodiments.

Propylene-based polymers may comprise 5 percent by weight comonomer or greater in some embodiments. In other embodiments, propylene-based polymers may comprise 7 percent by weight comonomer or greater. In other embodiments, propylene-based polymers may contain 35 percent or less comonomer by weight; 25 percent or less comonomer by weight in yet other embodiments.

One class of thermoplastic polymers useful in various embodiments are copolymers of ethylene and 1-octene or 1-butene, where the ethylene copolymer contains 90 weight percent or less ethylene; 85 weight percent or less ethylene in other embodiments; 50 weight percent or greater ethylene in other embodiments; and 55 weight percent or greater ethylene in yet other embodiments. The ethylene copolymer may contain 1-octene or 1-butene from 10 weight percent or greater in some embodiments; 15 weight percent or greater in other embodiments; 50 weight percent or less in other embodiments; and 45 weight percent or less in yet other embodiments. Each of the above weight percentages are based on the weight of the copolymer. In various embodiments, the ethylene copolymers may have a Melt Index of 0.25 g/10 minutes or greater; 0.5 g/10 minutes or greater in other embodiments; 30 g/10 minutes or less in other embodiments; and 20 g/10 minutes or less in yet other embodiments.

Other polymers useful in embodiments may include copolymers of propylene and ethylene, 1-octene, 1-hexene or 1-butene, where the propylene copolymer contains from 95 weight percent or less propylene; 93 weight percent or less in other embodiments; 65 weight percent or greater in other embodiments; and 75 weight percent or greater in yet other embodiments. The propylene copolymer may contain one or more comonomers, such as ethylene, 1-octene, 1-hexene or 1-butene, from 5 weight percent or greater in some embodiments; 7 weight percent or greater in other embodiments; 35 weight percent or less in other embodiments; and 25 weight percent or less in yet other embodiments. In various embodiments, the propylene copolymers may have a Melt Flow Rate of 0.7 g/10 minutes or greater; 1.4 g/10 minutes or greater in other embodiments; 85 g/10 minutes or less in other embodiments; and 55 g/10 minutes or less in yet other embodiments.

Alternatively, instead of a single polymer, a blend of polymers may be employed that has the physical characteristics described herein. For example, it may be desirable to blend a first polymer with relatively high MI or MFR that is outside the range described, with another of relatively low MI or MFR, so that the combined MI or MFR and the averaged density of the blend fall within the described ranges. A more crystalline alpha-olefin polymer may be combined with one of relatively lower crystallinity, such as one having a significant amount of long chain branching, to provide a blend that has substantially equivalent processing capability in preparing froths and foams described herein. Where reference is made to a "polymer" in this specification, it is understood that blends of olefin polymers with equivalent physical characteristics may be employed with like effect and are considered to fall within our description of the various embodiments.

In certain embodiments, the thermoplastic resin may be an ethylene-octene copolymer or interpolymer having a density between 0.857 and 0.911 g/cc and melt index (190°C with 2.16 kg weight) from 0.1 to 100 g/10 min. In other embodiments, the ethylene-octene copolymers may have a density between 0.863 and 0.902 g/cc and melt index (190°C with 2.16 kg weight) from 0.8 to 35 g/10 min. The ethylene-octene copolymer or interpolymer may incorporate 20-45 percent octene by weight of ethylene and octene.

In certain embodiments, the thermoplastic resin may be a propylene-ethylene copolymer or interpolymer having an ethylene content between 5 and 20% by weight and a melt flow rate (230°C with 2.16 kg weight) from 0.5 to 300 g/10 min. In other embodiments, the propylene-ethylene copolymer or interpolymer may have an ethylene content between 9 and 12 percent by weight and a melt flow rate (230°C with 2.16 kg weight) from 1 to 100 g/10 min.

In certain other embodiments, the thermoplastic resin may be a low density polyethylene having a density between 0.911 and 0.925 g/cc and melt index (190°C with 2.16 kg weight) from 0.1 to 100 g/10 min.

In some embodiments, the thermoplastic resin may have a crystallinity of less than 50 percent. In other embodiments, the crystallinity of the resin may be from 5 to 35 percent. In yet other embodiments, the crystallinity may range from 7 to 20 percent.

In some embodiments, the thermoplastic resin is a semi-crystalline polymer and may have a melting point of less than 110°C. In other embodiments, the melting point may be from 25 to 100°C. In yet other embodiments, the melting point may be between 40 and 85°C.

In some embodiments, the thermoplastic resin is a glassy polymer and may have a glass transition temperature of less than 110°C. In other embodiments, the glass transition temperature may be from 20 to 100°C. In yet other embodiments, the glass transition temperature may be from 50 to 75°C.

In certain embodiments, the thermoplastic resin may have a weight average molecular weight greater than 10,000 g/mole. In other embodiments, the weight average molecular weight may be from 20,000 to 150,000 g/mole; in yet other embodiments, from 50,000 to 100,000 g/mole.

The one or more thermoplastic resins may be contained within the aqueous dispersions described herein in an amount from 1 percent by weight to 96 percent by weight polymer solids. For instance, the thermoplastic resin may be present in the aqueous dispersion in an amount from 10 percent by weight to 60 percent by weight in one embodiment, and 20 percent to 50 percent by weight in another embodiment.

### Porous Substrate

Porous substrates that may be used in the lamination processes disclosed herein may include carpet, artificial turf, wovens, non-wovens, open-cell foams, canvas, artificial leather, supported porous membranes for filtration and roofing applications, perforated backings, and other porous substrates. In some embodiments, porous substrates may include griege goods, tufted substrates, or tufted backings following a tufting process and any other intermediate processing steps during the manufacture of carpet or artificial turf prior to the processes disclosed herein for laminating or securing the tufts to the backing.

### Artificial turf, Carpet, Backing Layers, and Tuft and Pile Fibers

As used herein, the term fibers refers to fibers, yarns, tufts, monofilaments, ribbons, or precursors thereof such as, for example, films and/or tapes. Suitable fibers to be used in forming artificial turf, carpet, backing layers, and tuft and pile fibers may include, for example, fibers, yarns, films and ribbons which are spun, fibrillated, slit, split and/or serrated. In some embodiments, fibers to be used may include thermoplastic resins, as discussed above. In other embodiments, fibers may include ethylene-based or propylene-based homopolymers, copolymers, interpolymers, and multi-block interpolymers.

Suitable primary backings for carpet and artificial turf may include both woven and non-woven primary backings. More specifically, suitable backings may include those prepared from jute, polypropylene, polyethylene, etc., as well as any other material known to be suitable for primary backings in either carpeting or artificial turf, including the thermoplastic resins disclosed above. Tufted substrates may be initially prepared in the conventional manner, the griege goods being constructed by tufting fibers or yarns into a primary backing.

In some embodiments, porous substrates or backings may include woven, knitted, and non-woven fibrous webs. In some embodiments, the substrates may be formed from fibers such as synthetic fibers, natural fibers, or combinations thereof. Synthetic fibers include, for example, polyester, acrylic, polyamide, polyolefin, polyaramid, polyurethane, regenerated cellulose, and blends thereof. Polyesters may include, for example, polyethylene terephthalate, polytriphenylene terephthalate, polybutylene terephthalate, polylatic acid, and combinations thereof. Polyamides may include, for example, nylon 6, nylon 6,6, and combinations thereof. Polyolefins may include, for example, propylene based homopolymers, copolymers, and multi-block interpolymers, and ethylene based homopolymers, copolymers, and multi-block interpolymers, and combinations thereof. Polyaramids may include, for example, poly-p-phenyleneteraphthalamid (KEVLAR®), poly-m-phenyleneteraphthalamid (NOMEX®), and combinations thereof. Natural fibers may include, for example, wool, cotton, flax, and blends thereof. Other suitable materials include the thermoplastic resins as disclosed above.

The substrate may be formed from fibers or yarns of any size, including microdenier fibers and yarns (fibers or yarns having less than one denier per filament). The fabric may be comprised of fibers such as staple fiber, filament fiber, spun fiber, or combinations thereof. The substrate may be of any variety, including but not limited to, woven fabric, knitted fabric, non-woven fabric, or combinations thereof.

In other embodiments, substrates may include bicomponent fibers, multi-layer films, metals, textiles, and ceramics. Non-wovens may include elastic non-wovens and soft non-wovens. In other embodiments, substrates may include fabrics or other textiles, porous films, and other non-wovens, including coated substrates. In certain embodiments, the substrate may be a soft textile, such as a soft or elastic non-woven, such as an elastomeric polyolefin or a polyurethane, for example. Wovens and/or knits made from microdenier fibers may also provide the desired substrate performance.

In some embodiments, the non-wovens may be based on polyolefin mono-component fibers, such as ethylene-based or propylene-based polymers. In other embodiments, bicomponent fibers may be used, for example where the core is based on a polypropylene and the sheath may be based on polyethylene. It should be understood that the fibers used in embodiments of the substrate may be continuous or non-continuous, such as staple fibers.

Examples of suitable soft non-wovens are described in, for example, WO2005111282A1 and WO2005111291A1. Additionally, a web having similar physical properties to those described above may also be utilized. The web structure may be formed from individual fibers, filaments, or threads which are interlaid, but not in an identifiable manner. Non-woven fabrics or webs have been formed from many processes such as melt blowing, spun-bonding, electrospun, and bonded carded web processes. The basis weight of the non-wovens may range from 25 g/m² to greater then 150 g/m².

In some embodiments, elastic non-wovens, such as described in U.S. Patent No 6,994,763 may be used. The elastic non-woven may be based on bicomponent fibers, where the core component may an elastomeric polymer and the sheath component may a polyolefin. The non-woven may have a basis weight ranging from 20 g/m² to 150 g/m² and may be produced on spun-bond technology which has bicomponent capability. Representative examples of commercially available elastomers for the core component of the bicomponent fiber may include the following polymers: KRATON® Polymers, ENGAGE™ polymers, VERSIFY™ elastomers, INFUSE™ olefin block copolymers, VISTAMAXX™ polyolefin elastomers, VECTOR™ polymers, polyurethane elastomeric materials ("TPU"), polyester elastomers, and heterophasic block copolymers.

In other embodiments, suitable elastic non-wovens may be formed from one or more "elastomeric" polymers. The term "elastomeric" generally refers to polymers that, when subjected to an elongation, deform or stretch within their elastic limit. For example, spun-bonded fabrics formed from elastomeric filaments typically have a root mean square average recoverable elongation of at least 75% based on machine direction and cross direction recoverable elongation values of the fabric after 30% elongation of the fabric and one pull. Advantageously, spun-bonded fabrics formed from elastomeric filaments typically have a root mean square average recoverable elongation of at least 65% based on machine direction and cross direction recoverable elongation values of the fabric after 50% elongation of the fabric and one pull.

In other embodiments, apertured films may be utilized as a layer(s) of the composite structures, substrates, or laminate film layers described herein. Use of apertured films may increase the strength of the structure. Descriptions of apertured films may be found in WO200080341A1 and U.S. Patent Nos. 3,929,135 and 4,324,246, for example. Apertured films may include thin polymeric films with small openings space uniformly across the width of the film.

In some embodiments, porous substrates may include open-cell foams may be formed from the above described thermoplastic resins. In some embodiments, the open-cell foams may include foams having macropores. In other embodiments, the open-cell foams may include foams having micropores. In yet other embodiments, open-cell foam substrates may include pores large enough to allow flow of molten polymer (during lamination with the film layer, described below) into the pores of the open-cell foam, such as during suctioning and roller-pressing in the lamination process described above with respect to Figures 1 and 2.

In some embodiments, porous substrates may be formed from the thermoplastic resins described above. In other embodiments, substrates may include films, fabrics, and foams formed from the above described thermoplastic resins. In yet other embodiments, substrates may include a froth, a foam, a thermoplastic sheet or film, a woven or non-woven, fiberglass, or a melt spun-bonded or melt blown material.

Porous substrates may include sufficient void space to allow flow of the molten lamination film, or molten portions thereof, into the void spaces or pores. In some embodiments, porous substrates may have an average pore size of at least 0.1 µm (microns); at least 0.5 µm (microns) in other embodiments; at least 1 µm(micron) in other embodiments; at least 5 µm (microns) in other embodiments; and at least 10 µm (microns) in yet other embodiments. In other embodiments, porous substrates may have an average pore size ranging from a lower limit of 0.1, 0.25, 0.5, 1, 2, 5, 10, or 20 µm (microns) to an upper limit of 1, 2, 5, 10, 20, 50, or 100 µm (microns).

### Laminate Film Layer

Laminate films useful in embodiments disclosed herein may include mono-layer films, foamable mono-layer films, or mono-layer foams formed from the thermoplastic resins described above. In other embodiments, laminate films useful in embodiments disclosed herein may include multi-layer structures. In some embodiments, multi-layer structures may include two or more film layers. In other embodiments, multi-layer structures may include one or more film layers and one or more foam layers. In other embodiments, multi-layer structures may include one or more film layers and one or more expandable (or foamable) film layers. In yet other embodiments, multi-layer structures may include one or more film, foam, and foamable layers.

The layers of a multi-layer structure may include micro-layer films. For example, in some embodiments, films may include one or more microlayer film layers, each having a thickness of less than 150 µm (microns). In other embodiments, films may include one or more microlayer film layers or expandable microlayer film layers, each having a thickness of greater than 10nm (100 Angstroms) and less than 50 µm (microns). In some embodiments, films used herein may include from 1 to 20,000 total layers, including film, foam, and expandable film layers.

Mono-layer films, expandable films, and foams may be formed from one or more of the above described thermoplastic resins. As described with reference to Figures 1 and 2, the films may be heated at varied points in the process, such as before or after disposing the film on the porous substrate. As such, in some embodiments, mono-layer structures may have a melting point lower than a melting point of components in the porous substrate, and, in other embodiments, mono-layer structures may have a melting point equal to or greater than a melting point of components in the porous substrate

Multi-layer structures useful in embodiments disclosed herein may be formed from one or more of the above described thermoplastic resins. It is preferred that the melting point of at least one outer layer of the structure be lower than the melting point of the remaining layers of the multi-layer structure. In some embodiments, such as where the multi-layer structure is applied to a primary backing or porous substrate, the temperature of an outer layer, having a lower melting point than other layers, may be brought above the melting point of that outer layer, allowing the outer layer to bond with the primary backing or porous substrate.

In other embodiments, such as where the multi-layer structure is applied between two substrates, such as a griege good or tufted primary backing and a secondary backing, both outer layers of the multi-layer structure may have lower melting points than the other, inner, layers. The temperature of the outer layers, having a lower melting point than inner layers, may be brought above the melting points of the outer layers, allowing the outer layers to bond with both substrates.

In some embodiments, the multi-layer structures may be co-extruded. In other embodiments, the multi-layer structures may include applying, disposing, or coalescing a molten film, dispersion, froth, or foam layer on a mono- or multi-layer film, foam, or expandable substrate.

As described above, laminate film layers useful herein may include foams and expandable layers. In some embodiments, an expandable layer may be foamed prior to disposing the multi-layer film on a porous substrate. In other embodiments, heating of the film to melt a bonding layer may cause foaming of the foamable layer during the lamination process. In other embodiments, foaming of the foamable layer may be performed after the above described lamination process or in a post-production process. In some embodiments, the expandable films described herein may also be crosslinkable. For example, expandable films may include crosslinking agents for crosslinking the foam upon application of sufficient heat for both expanding and crosslinking the crosslinkable, expandable film layer. Foams and expandable (foamable) structures are disclosed in, for example, U.S. Patent Nos. 6,949,588, 6,723,793, 6,440,241, 4,902,721, and others. Films that are expandable, crosslinkable, or both, may be referred to herein as modifiable films.

For example, thermoplastic resins, in the form of discrete particles, rods, bars, sheets, or any shape, may be imbibed or impregnated with mechanical or physical foaming or blowing agents. The impregnated resins may then be exposed to a temperature sufficient to produce foam of desired density and configuration. The density of the resultant foam depends upon the total amount of foaming or blowing agent present, the vapor pressure of the blowing agent, the thermal volume expansion ratio of the blowing agent, and the density of the polymer to be foamed.

In some embodiments, the lamination film may include a foam. In other embodiments, multi-layer foams or a sheet including one or more foam layers may be used. In yet other embodiments, the foams may be crosslinkable or crosslinked. In some embodiments, the foam or foam layer(s) may include low density foam, medium density foam, or high density foam. Foam density, for example, may range from 100 kg/m³ to 800 kg/m³ in some embodiments. In various other embodiments, foam density may range from a lower limit of 50, 100, 150, 200, 250, 300, 350, 400, 450, or 500 kg/m³ to an upper limit of 100, 150, 200, 250, 300, 350, 400, 450, 500, 550, 600, 650, 700, 750, 800, or 1000 kg/m³. In some embodiments, foams may include macrocellular foams; and in other embodiments, the foam or foam layer(s) may include microcellular foams.

In some embodiments, lamination films may include both a film layer and a foam layer. For example, a lamination film may include a multilayer structure that includes a polystyrene foam layer and an adhesive film layer, such as a VERSIFY polymer.

Film structures useful in embodiments disclosed herein may be tailored to specific substrates. For example, film structures may include one or more thermoplastic resins for modifying the final fiber locking strength, tuft lock, or other properties of the resulting composite structure. As another example, thermoplastic resins used in a multi-component structure may be of differing densities in order to balance the strength, melting points, and the processing/handling of the film. Further, mineral fillers may be added to one or more film layers, reducing the shrinkage of the resulting composite structure and increasing the density (weight) of the resulting composite structure.

### Dispersion Layer (POD)

As described above, an aqueous dispersion may be disposed on the porous substrate prior to application of the laminate film layer to increase the binding strength and/or to improve the compatibility of the laminate film layer and the porous substrate. Dispersions may be applied over the full width of the substrate, or may be applied in patterns or to specific portions of the substrate. In some embodiments, the dispersion may be pre-coated on the substrate. In other embodiments, the dispersion may be applied in-line prior to the above described lamination process, or may be applied during the lamination step, such as prior to the contacting of the film and the porous substrate. In yet other embodiments, the dispersion may be applied to the laminate film as a coating on an outer layer of the film.

Dispersions used in embodiments of the present disclosure comprise water, at least one thermoplastic resin as described above, and, in some embodiments, a dispersion stabilizing agent. The thermoplastic resin, in some embodiments, may be a self-stabilizing resin, readily dispersible in water by itself. In other embodiments, the thermoplastic resin may include a resin that is not readily dispersible in water by itself. Dispersions may also include various additives, including froth stabilizing agents.

Dispersions of the above described thermoplastic resins may use a stabilizing agent to promote the formation of a stable dispersion or emulsion. In some embodiments, the stabilizing agent may be a surfactant, a polymer (different from the thermoplastic resin detailed above), or mixtures thereof. In other embodiments, the resin is a self-stabilizer, such that an additional exogenous stabilizing agent may not be necessary. For example, a self-stabilizing system may include a partially hydrolyzed polyester, where by combining polyester with an aqueous base, a polyester resin and a surfactant-like stabilizer molecule may be produced. In particular, the stabilizing agent may be used as a dispersant, a surfactant for frothing the dispersion, or may serve both purposes. In addition, one or more stabilizing agents may be used in combination.

In certain embodiments, the stabilizing agent may be a polar polymer, having a polar group as either a comonomer or grafted monomer. In preferred embodiments, the stabilizing agent may include one or more polar polyolefins, having a polar group as either a comonomer or grafted monomer. Typical polymers include ethylene-acrylic acid (EAA) and ethylene-methacrylic acid copolymers, such as those available under the trademarks PRIMACOR™ (trademark of The Dow Chemical Company), NUCREL™ (trademark of E.I. DuPont de Nemours), and ESCOR™ (trademark of ExxonMobil) and described in U.S. Patent Nos. 4,599,392, 4,988,781, and 5,938,437. Other suitable polymers include ethylene-ethyl acrylate (EEA) copolymer, ethylene-methyl methacrylate (EMMA), and ethylene-butyl acrylate (EBA). Other ethylene-carboxylic acid copolymer may also be used. Those having ordinary skill in the art will recognize that a number of other useful polymers may also be used.

If the polar group of the stabilizing agent is acidic or basic in nature, the dispersion stabilizing polymer may be partially or fully neutralized with a neutralizing agent to form the corresponding salt. The salts may be alkali metal or ammonium salts of the fatty acid, prepared by neutralization of the acid with the corresponding base, e.g., NaOH, KOH, and NH₄OH. These salts may be formed in situ in the dispersion step, as described more fully below. In certain embodiments, neutralization of the dispersion stabilizing agent, such as a long chain fatty acid or EAA, may be from 25 to 200% on a molar basis; from 50 to 110% on a molar basis in other embodiments. For example, for EAA, the neutralizing agent is a base, such as ammonium hydroxide or potassium hydroxide, for example. Other neutralizing agents may include lithium hydroxide or sodium hydroxide, for example. Those having ordinary skill in the art will appreciate that the selection of an appropriate neutralizing agent depends on the specific composition formulated, and that such a choice is within the knowledge of those of ordinary skill in the art.

Other dispersion stabilizing agents that may be used include long chain fatty acids or fatty acid salts having from 12 to 60 carbon atoms. In other embodiments, the long chain fatty acid or fatty acid salt may have from 12 to 40 carbon atoms.

Additional dispersion stabilizing agents include cationic surfactants, anionic surfactants, or non-ionic surfactants. Examples of anionic surfactants include sulfonates, carboxylates, and phosphates. Examples of cationic surfactants include quaternary amines. Examples of non-ionic surfactants include block copolymers containing ethylene oxide, propylene oxide, butylene oxide, and silicone surfactants. Surfactants useful as a dispersion stabilizing agent may be either external surfactants or internal surfactants. External surfactants are surfactants that do not become chemically reacted into the polymer during dispersion preparation. Examples of external surfactants useful herein include salts of dodecyl benzene sulfonic acid and lauryl sulfonic acid. Internal surfactants are surfactants that do become chemically reacted into the polymer during dispersion preparation. An example of an internal surfactant useful herein includes 2, 2-dimethylol propionic acid and its salts or sulfonated polyols neutralized with ammonium chloride.

In particular embodiments, the dispersing agent or stabilizing agent may be used in an amount ranging from greater than zero to 60% by weight based on the amount of thermoplastic resin (or thermoplastic resin mixture) used. With respect to the thermoplastic resin and the dispersion stabilizing agent, in some embodiments, the thermoplastic resin may comprise between 30% to 99% (by weight) of the total amount of thermoplastic resin and dispersion stabilizing agent in the composition. In other embodiments, the thermoplastic resin may comprise between 50% and 80% (by weight) of the total amount of thermoplastic resin and dispersion stabilizing agent in the composition. In yet other embodiments, the thermoplastic resins may comprise about 70% (by weight) of the total amount of thermoplastic resin and dispersion stabilizing agent in the composition. For example, long chain fatty acids or salts thereof may be used from 0.5 to 10% by weight based on the amount of thermoplastic resin. In other embodiments, ethylene-acrylic acid or ethylene-methacrylic acid copolymers may be used in an amount from 0.5 to 60% by weight based on the amount of the thermoplastic resin. In yet other embodiments, sulfonic acid salts may be used in an amount from 0.5 to 10% by weight based on the amount of thermoplastic resin.

As discussed above, more than one dispersion stabilizing agent may be used, and combinations may be used as a dispersion stabilizing agent and as a frothing surfactant, for example. One of ordinary skill in the art will recognize that the dispersants used to create a relatively stable aqueous dispersion may vary depending on the nature of the thermoplastic resin employed.

Dispersion formulations in accordance with embodiments disclosed herein may include a liquid medium, such as water, a thermoplastic resin, a dispersion stabilizing agent, and optionally frothing surfactants, additives, and fillers. In some embodiments, the aqueous dispersions may include polyolefin resin particles ranging in size from 0.2 to 10 µm (microns) from 0.5 to 5 µm (microns) in another embodiment; and from 1 to 2 µm (microns).

The thermoplastic resin and, when used, the dispersion stabilizing agent may be dispersed in a liquid medium, which in some embodiments is water. In some embodiments, sufficient base is added to neutralize the resultant dispersion to achieve a pH range of 6 to 14. In particular embodiments, sufficient base is added to maintain a pH between 9 to 12. Water content of the dispersion may be controlled so that the combined content of the thermoplastic resin and the dispersion stabilizing agent (solids content) is between 1% to 74% (by volume). In another embodiment, the solids content ranges between 25% to 74% (by volume). In yet another embodiment, the solid content ranges between 30% to 50% (without filler, by weight). In yet another embodiment, the solids content ranges is between 40% to 55% (without filler, by weight).

Dispersions formed in accordance with some embodiments may be characterized as having an average particle size of between 0.3 to 8.0 µm (microns). In other embodiments, dispersions may have an average particle size of from 0.8 to 1.2 µm (microns). "Average particle size" as used herein refers to the volume-mean particle size. In order to measure the particle size, laser-diffraction techniques may be employed for example. A particle size in this description refers to the diameter of the polymer in the dispersion. For polymer particles that are not spherical, the diameter of the particle is the average of the long and short axes of the particle. Particle sizes can be measured, for example, on a Beckman-Coulter LS230 laser-diffraction particle size analyzer or other suitable device.

In a specific embodiment, a thermoplastic resin and a dispersion stabilizing agent are melt-kneaded in an extruder along with water and a neutralizing agent, such as ammonia, potassium hydroxide, or a combination of the two, to form a dispersion compound. Those having ordinary skill in the art will recognize that a number of other neutralizing agents may be used. In some embodiments, a filler may be added after blending the thermoplastic resin and stabilizing agent.

In another embodiment, a thermoplastic resin, such as a self-stabilizing resin, may be melt-kneaded in an extruder along with water and a neutralizing agent, such as ammonia, potassium hydroxide, or a combination of the two to form a dispersion compound. In yet another embodiment, a thermoplastic resin and a stabilizing agent are melt-kneaded in an extruder along with water without use of a neutralizing agent to form a dispersion compound.

Any melt-kneading means known in the art may be used. In some embodiments, a kneader, a BANBURY® mixer, a single-screw extruder, or a multi-screw extruder is used. A process for producing the dispersions in accordance with the present disclosure is not particularly limited. One preferred process, for example, is a process comprising melt-kneading the above-mentioned components according to U.S. Patent No. 5,756,659 and U.S. Patent Publication No. 20010011118.

An extrusion apparatus that may be used in embodiments of the disclosure may be described as follows. An extruder, in certain embodiments a twin screw extruder, may be coupled to a back pressure regulator, melt pump, or gear pump. Desired amounts of base and initial water are provided from a base reservoir and an initial water reservoir, respectively. Any suitable pump may be used, but in some embodiments a pump that provides a flow of about 150 cc/min at a pressure of 24000kPa (240 bar) may be used to provide the base and the initial water to the extruder. In other embodiments, a liquid injection pump may provide a flow of 300 cc/min at 20000kPa (200 bar) or 600 cc/min at 13300kPa (133 bar). In some embodiments, the base and initial water are preheated in a preheater.

In producing the dispersion, the dispersion stabilizing surfactants are generally added to the dispersion along with antioxidants, bactericides, etc., when viscosity is low and good mixing may be obtained. The dispersion stabilizing agents should then be added followed by any inorganic fillers, slowly enough to ensure good dispersion and avoid clumping/lumping of the filler. Finally a thickener may be added to obtain the desired viscosity.

In some embodiments, the aqueous dispersions used herein may include ethylene vinyl acetate copolymers. In other embodiments, aqueous dispersion used herein may include styrene-butadiene copolymers. In yet other embodiments, aqueous dispersions used herein may include one or more of acrylic polymers, urethane polymers, epoxy polymers, and monomers therefore.

### Additives

The polymers, dispersions, films, and foams disclosed herein may optionally contain fillers in amounts, depending on the application for which they are designed, ranging from 2-100 percent (dry basis) of the weight of the thermoplastic resin. These optional ingredients may include, for example, calcium carbonate, titanium dioxide powder, polymer particles, hollow glass spheres, fibrillated fibers and polymeric fibers such as polyolefin based staple monofilaments. Foams designed for use in the absorbent articles may contain bulk liquid-absorbing material, such as short cotton fiber or other cellulose fiber evenly distributed throughout the polymer foam.

The fillers may be selected from those traditionally used, for example, finely divided, ground, precipitated or microcrystalline fillers such as aluminum hydroxide, feldspar, dolomite, calcium carbonate, limestone, and wollastonite, among others. Mixtures of aluminum hydroxide and calcium carbonate, the latter often in the form of finely ground limestone, are preferred. The fillers are generally employed in amounts of 50 parts to 350 parts per 100 parts polyol, more preferably 100 parts to 300 parts, these parts being parts by weight. In foam layers, the amount of filler is generally less, *i.e.,* on the order of 100 parts.

Additives may also be used with the thermoplastic resins, dispersion stabilizing agents, surfactants, or fillers without deviating from the scope of the present disclosure. For example, additives may include wetting agents, surfactants, anti-static agents, antifoam agent, anti block, wax-dispersion pigments, a neutralizing agent, a thickener, a compatibilizer, a brightener, flame retardants, UV stabilizers, moisturizing agents, a rheology modifier, a biocide, preservatives, a fungicide, anti-oxidants, anti-ozonants, processing oils, plasticizers, processing aids, hindered amine light stabilizers (HALS), UV absorbers, crosslinking agents, carbon black, energy absorbing agents, and other additives known to those skilled in the art.

Other suitable additives include fillers, such as organic or inorganic particles, including diatomaceous earth, clays, talc, titanium dioxide, zeolites, powdered metals, organic or inorganic fibers, including carbon fibers, silicon nitride fibers, steel wire or mesh, and nylon or polyester cording, nano-sized particles, clays, and so forth; tackifiers, oil extenders, including paraffinic or napthelenic oils; and other natural and synthetic polymers, polymeric fibers (including nylon, rayon, cotton, polyester, and polyaramide), metal fibers, flakes or particles, expandable layered silicates, phosphates or carbonates, such as clays, mica, silica, alumina, aluminosilicates or aluminophosphates, carbon whiskers, nanoparticles including nanotubes, wollastonite, graphite, zeolites, and ceramics, such as silicon carbide, silicon nitride or titania. Silane based or other coupling agents may also be employed for better filler bonding. Other examples of conventional fillers include milled glass, calcium carbonate, aluminum trihydrate, talc, bentonite, antimony trioxide, kaolin, fly ash, or other known fillers. Other additives include mixing aids and emulsifiers.

Other substances, such as fatty oils and functional additives, besides fibers and fillers, may be used when desiring to modify physical properties of the thermoplastic resin. If the resulting polymer is to be used in end applications where electrical or luminescent properties are required, electrolytes may be used so as to render the polymer electro-conductive, or fluorescent or phosphorescent additives so as to render the polymer luminescent.

Microwave absorbing agents may also be used as an additive in a material to render the material heatable by electromagnetic radiation (usually microwave or radio frequency). Other agents, added to polymeric materials to change or improve certain properties, may also impart improved heatability to the polymer. Such additives can be added to polymers to facilitate microwave heating of the polymers. Microwave absorbing agents are more fully described in Provisional U.S. Patent Application Nos. 60/809,568, 60/809,526, and 60/809,520, each filed May 31, 2006.

As described above, composite structures may be formed by disposing a laminate film layer on a porous substrate. In some embodiments, a second substrate may be disposed on the laminate film layer, sandwiching the laminate film layer between the two substrates. In yet other embodiments, an aqueous dispersion may be applied between the porous substrate and the laminate film layer to improve adhesion of the substrate and the laminate film layer.

In some embodiments, carpet or artificial turf formed using the processes disclosed herein may have a tuft lock of at least 2.0 kg. In other embodiments, carpet or artificial turf may have a tuft lock of at least 2.5 kg; at least 3 kg in other embodiments; at least 3.25 kg in other embodiments; at least 3.4 kg in other embodiments; at least 3.5 kg in other embodiments; at least 3.6 kg in other embodiments; at least 3.75 kg in other embodiments; at least 4 kg in other embodiments; and at least 4.5 kg in yet other embodiments.

Various embodiments of composite structures formed using the processes disclosed herein may be illustrated by the following examples.

### Examples

For the following sample descriptions and results, melt flow rate is measured according to ASTM D1238 (*e.g.,* 190°C, 2.16 kg weight for polyethylene; 230°C, 2.16 kg weight for polypropylene), density is measured according to ASTM D792, melting point is determined by DSC according to ASTM D3418, Vicat softening temperature is determined according to ASTM D1525, and Tuft Lock is measured according to ISO 4919.

### Samples 1-3, Mono-layer film laminations

### Sample 1 (heating and roller casting)

A film having a 250 µm (micron) thickness formed from a homogeneous ethylene-octene copolymer (AFFINITY PF1140G, density of about 0.896 g/cc, melt index of about 1.6 g/10 minutes, a DSC melting temperature of 94°C, and a Vicat softening temperature of 77°C, available from The Dow Chemical Company, Midland, Michigan) is disposed on carpet according to the process as described above with respect to Figure 1, where heat is applied to increase the temperature of the film above the melting point of the polymer, but without application of vacuum during the heating/lamination or cooling stages.

### Sample 2 (heating and roller casting)

A film having a 250 µm (micron) thickness formed from a homogeneous ethylene-octene copolymer (AFFINITY PF1140G, density of about 0.896 g/cc, melt index of about 1.6 g/10 minutes, a DSC melting temperature of 94°C, and a Vicat softening temperature of 77°C, available from The Dow Chemical Company, Midland, Michigan) is disposed on carpet according to the process as described above with respect to Figure 1, where heat is applied to increase the temperature of the film above the melting point of the polymer, but without application of vacuum during the heating/lamination or cooling stages.

### Sample 3 (heating, vacuum, and roller casting)

A film having a 250 µm (micron) thickness formed from a homogeneous ethylene-octene copolymer (AFFINITY PF1140G, density of about 0.896 g/cc, melt index of about 1.6 g/10 minutes, a DSC melting temperature of 94°C, and a Vicat softening temperature of 77°C, available from The Dow Chemical Company, Midland, Michigan) is disposed on carpet according to the process as described above with respect to Figure 1, where heat is applied to increase the temperature of the film above the melting point of the polymer, with application of vacuum during the heating/lamination stage.

### Results

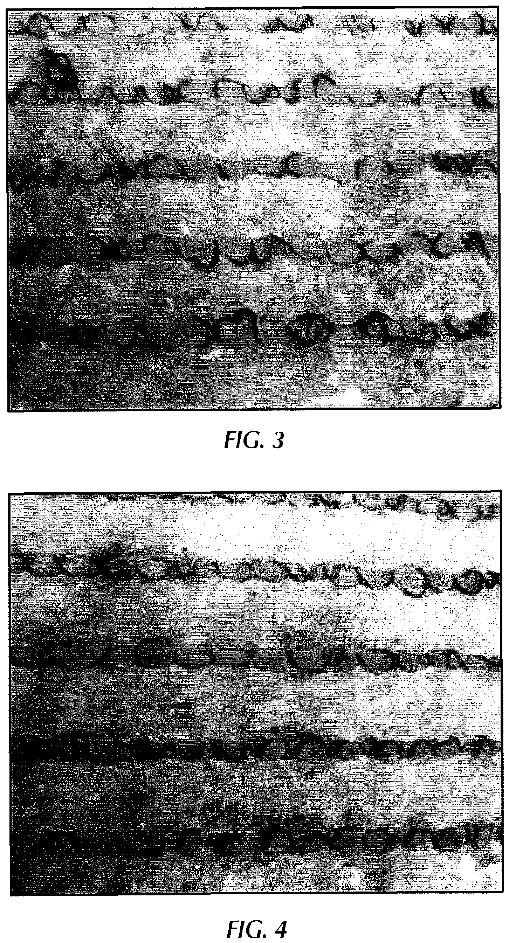

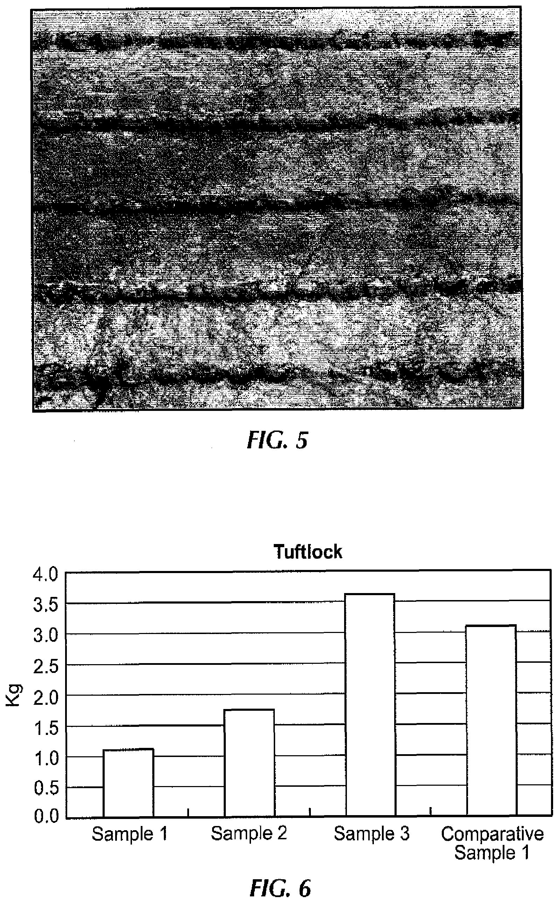

Figures 3, 4, and 5 are photographs of the coated tufted backings (griege goods) of Samples 1, 2, and 3, respectively. As can be seen, the tufts of Figures 3 and 4 (Samples 1 and 2) are loosely bound, whereas the tufts in Figure 5 (Sample 3) are tightly bound.

Properties of each of the above described samples are tested, including tuft lock and shrinkage. Results indicate that the tuft lock of the vacuum assisted lamination, Sample 3, is superior to roller casting, Samples 1-2. Additionally, tuft lock of Sample 2 is equivalent or superior to a traditional styrene-butadiene latex coated carpet (Comparative Sample 1).

### Samples 4-13, Multi-layer film laminations

### Sample 4

A multi-layer film having a 200 µm (micron) thick first layer formed from a homogeneous ethylene-octene copolymer (AFFINITY EG 8100G, density of 0.87 g/cc, melt index of about 1 g/10 minutes, a DSC melting temperature of 55°C, and a Vicat softening temperature of 43°C, available from The Dow Chemical Company, Midland, Michigan) and a 50 µm (micron) thick second layer formed from a heterogeneous ethylene-octene copolymer (DOWLEX SC 2108, density of 0.935 g/cc, melt index of about 2.5 g/10 minutes, and a Vicat softening temperature of 118°C, available from The Dow Chemical Company, Midland, Michigan) is disposed on carpet according to the process as described above with respect to Figure 1, where heat is applied to increase the temperature of the film above the melting point of the AFFINITY polymer, with application of vacuum during the heating/lamination stage.

### Sample 5

A multi-layer film having a 200 µm (micron) thick first layer formed from an ethylene-octene copolymer (AFFINITY EG 8100G, density of 0.87 g/cc, melt index of about 1 g/10 minutes, a DSC melting temperature of 55°C, and a Vicat softening temperature of 43°C, available from The Dow Chemical Company, Midland, Michigan) and a 50 µm (micron) thick second layer formed from a polyethylene (DOWLEX SC 2108, density of 0.935 g/cc, melt index of about 2.5 g/10 minutes, and a Vicat softening temperature of 118°C, available from The Dow Chemical Company, Midland, Michigan) and 70 parts calcium carbonate per hundred parts polyethylene is disposed on carpet according to the process as described above with respect to Figure 1, where heat is applied to increase the temperature of the film above the melting point of the AFFINITY polymer, with application of vacuum during the heating/lamination stage.

### Sample 6

A multi-layer film having a 50 µm (micron) thick first layer formed from an ethylene-octene copolymer (AFFINITY EG 8100G, density of 0.87 g/cc, melt index of about 1 g/10 minutes, a DSC melting temperature of 55°C, and a Vicat softening temperature of 43°C, available from The Dow Chemical Company, Midland, Michigan) and a 200 µm (micron) thick second layer formed from a polyethylene (DOWLEX SC 2108, density of 0.935 g/cc, melt index of about 2.5 g/10 minutes, and a Vicat softening temperature of 118°C, available from The Dow Chemical Company, Midland, Michigan) and 70 parts calcium carbonate per hundred parts polyethylene is disposed on carpet according to the process as described above with respect to Figure 1, where heat is applied to increase the temperature of the film above the melting point of the AFFINITY polymer, with application of vacuum during the heating/lamination stage.

### Sample 7

A multi-layer film having a 200 µm (micron) thick first layer formed from an ethylene-vinyl acetate copolymer (ELVAX 3182, approximately 28 weight percent vinyl acetate, density of 0.95 g/cc, melt index of about 3 g/10 minutes, a DSC melting temperature of 73°C, and a Vicat softening temperature of 49°C, available from E. I. du Pont de Nemours and Company) and a 50 µm (micron) thick second layer formed from a polyethylene (DOWLEX SC 2108, density of 0.935 g/cc, melt index of about 2.5 g/10 minutes, and a Vicat softening temperature of 118°C, available from The Dow Chemical Company, Midland, Michigan) is disposed on carpet according to the process as described above with respect to Figure 1, where heat is applied to increase the temperature of the film above the melting point of the ELVAX polymer, with application of vacuum during the heating/lamination stage.

### Sample 8

A multi-layer film having a 200 µm (micron) thick first layer formed from an ethylene-based copolymer (AFFINITY VP8770 G1, density of 0.885 g/cc, melt index of about 1 g/10 minutes, a DSC melting temperature of 82°C, and a Vicat softening temperature of 57°C, available from The Dow Chemical Company, Midland, Michigan) and a 50 µm (micron) thick second layer formed from a polyethylene (DOWLEX SC 2108, density of 0.935 g/cc, melt index of about 2.5 g/10 minutes, and a Vicat softening temperature of 118°C, available from The Dow Chemical Company, Midland, Michigan) is disposed on carpet according to the process as described above with respect to Figure 1, where heat is applied to increase the temperature of the film above the melting point of the AFFINITY polymer, with application of vacuum during the heating/lamination stage.

### Sample 9

A multi-layer film having a 200 µm (micron) thick first layer formed from an ethylene-octene copolymer (AFFINITY PL1880G, density of 0.902 g/cc, melt index of about 1 g/10 minutes, a DSC melting temperature of 99°C, and a Vicat softening temperature of 86°C, available from The Dow Chemical Company, Midland, Michigan) and a 50 µm (micron) thick second layer formed from a polyethylene (DOWLEX SC 2108, density of 0.935 g/cc, melt index of about 2.5 g/10 minutes, and a Vicat softening temperature of 118°C, available from The Dow Chemical Company, Midland, Michigan) is disposed on carpet according to the process as described above with respect to Figure 1, where heat is applied to increase the temperature of the film above the melting point of the AFFINITY polymer, with application of vacuum during the heating/lamination stage.

### Sample 10

A multi-layer film having a 200 µm (micron) thick first layer formed from an ethylene-vinyl acetate copolymer (ELVAX 3120, approximately 7.5 weight percent vinyl acetate, density of 0.93 g/cc, melt index of about 1.2 g/10 minutes, a DSC melting temperature of 99°C, and a Vicat softening temperature of 84°C, available from E. I. du Pont de Nemours and Company) and a 50 µm (micron) thick second layer formed from a polyethylene (DOWLEX SC 2108, density of 0.935 g/cc, melt index of about 2.5 g/10 minutes, and a Vicat softening temperature of 118°C, available from The Dow Chemical Company, Midland, Michigan) is disposed on carpet according to the process as described above with respect to Figure 1, where heat is applied to increase the temperature of the film above the melting point of the ELVAX polymer, with application of vacuum during the heating/lamination stage.

### Sample 11

A multi-layer film having a 200 µm (micron) thick first layer formed from an ethylene-butyl acrylate copolymer (ELVALOY 3117 AC, approximately 17 weight percent butyl acrylate, density of 0.924 g/cc, melt index of about 1.5 g/10 minutes, a DSC melting temperature of 99°C, and a Vicat softening temperature of 60°C, available from E. I. du Pont de Nemours and Company) and a 50 µm (micron) thick second layer formed from a polyethylene (DOWLEX SC 2108, density of 0.935 g/cc, melt index of about 2.5 g/10 minutes, and a Vicat softening temperature of 118°C, available from The Dow Chemical Company, Midland, Michigan) is disposed on carpet according to the process as described above with respect to Figure 1, where heat is applied to increase the temperature of the film above the melting point of the ELVALOY polymer, with application of vacuum during the heating/lamination stage.

### Sample 12

A multi-layer film having a 200 µm (micron) thick first layer formed from an propylene-ethylene copolymer (VERSIFY 2300, density of 0.866 g/cc, melt index of about 2 g/10 minutes, a DSC melting temperature of 65°C, and a Vicat softening temperature of 30°C, available from The Dow Chemical Company, Midland, Michigan) and a 50 µm (micron) thick second layer formed from a propylene-based random copolymer (DOW PP R315-07RSB, density of 0.9 g/cc, melt index of about 7 g/10 minutes, and a Vicat softening temperature of 129°C, available from The Dow Chemical Company, Midland, Michigan) is disposed on carpet according to the process as described above with respect to Figure 1, where heat is applied to increase the temperature of the film above the melting point of the VERSIFY polymer, with application of vacuum during the heating/lamination stage.

### Sample 13

A multi-layer film having a 200 µm (micron) thick first layer formed from a polyolefin plastomer (density of 0.876 g/cc, melt index of about 2 g/10 minutes, a DSC melting temperature of 80°C, available from The Dow Chemical Company, Midland, Michigan) and a 50 µm (micron) thick second layer formed from a propylene-based random copolymer (DOW PP R315-07RSB, density of 0.9 g/cc, melt index of about 7 g/10 minutes, and a Vicat softening temperature of 129°C, available from The Dow Chemical Company, Midland, Michigan) is disposed on carpet according to the process as described above with respect to Figure 1, where heat is applied to increase the temperature of the film above the melting point of the polyolefin plastomer, with application of vacuum during the heating/lamination stage. Sample 14

A multi-layer film having a 200 µm (micron) thick first layer formed from an ethylene-octene copolymer (AFFINITY EG 8100G, density of 0.87 g/cc, melt index of about 1 g/10 minutes, a DSC melting temperature of 55°C, and a Vicat softening temperature of 43°C, available from The Dow Chemical Company, Midland, Michigan) and a 50 µm (micron) thick second layer formed from a polyethylene (HDPE KS10100, density of 0.955 g/cc, melt index of about 4 g/10 minutes, and a Vicat softening temperature of 128°C, available from The Dow Chemical Company, Midland, Michigan) is disposed on carpet according to the process as described above with respect to Figure 1, where heat is applied to increase the temperature of the film above the melting point of the AFFINITY polymer, with application of vacuum during the heating/lamination stage.

### Sample 15

A multi-layer film having a 50 µm (micron) thick first layer formed from an ethylene-octene copolymer (AFFINITY EG 8100G, density of 0.87 g/cc, melt index of about 1 g/10 minutes, a DSC melting temperature of 55°C, and a Vicat softening temperature of 43°C, available from The Dow Chemical Company, Midland, Michigan) and a 200 µm (micron) thick second layer formed from a polyethylene (HDPE KS10100, density of 0.955 g/cc, melt index of about 4 g/10 minutes, and a Vicat softening temperature of 128°C, available from The Dow Chemical Company, Midland, Michigan) is disposed on carpet according to the process as described above with respect to Figure 1, where heat is applied to increase the temperature of the film above the melting point of the AFFINITY polymer, with application of vacuum during the heating/lamination stage.

Advantageously, embodiments disclosed herein may provide for an improved process for laminating porous substrates. Such processes and products formed in these processes may include one or more of the following benefits: lower capital investment; smaller required workspace; similar to better tuft lock of fibers in carpet or artificial turf; additional effects on finishing may be obtained; better dimensional stability of carpet fibers; ease for tailoring the adhesion of film to textile substrate by using coextruded structures; simpler process than current textile finishing operations; and the processes may be easily implemented in facilities without a coating process. These processes may allow similar wetting and penetration of the coating substrate onto the porous substrate without the need for special coating equipment and for similar or better adhesion performance. Additionally, this is a dry process that combines the benefits of low viscosity systems, aqueous or not, with the processing benefits of thermoplastic materials at a lower cost and complexity for similar or better performance. The processes also allow for optimizing the adhesive layer, combining other functionalities within the film, such as stiffness, and use of recycle material. Improved adhesion between fibers and carpet backing may also be achieved.

## Claims

1. A process for laminating a porous substrate provided from a tufting manufacturing, process, the process comprising:
(a) selecting a porous substrate comprising a tufted substrate,
(b) selecting a lamination film comprising an outer adhesive polymer layer, wherein said outer adhesive polymer layer comprises an ethylene based homopolymer, copolymer, interpolymer, or multi-block interpolymer, a propylene based homopolymer, copolymer, interpolymer, or multi-block interpolymer, or combinations thereof, and wherein said outer adhesive polymer layer has a melting point temperature less than the melting point temperature of the porous substrate;
(c) disposing said lamination film comprising said outer adhesive polymer layer on a surface of said porous substrate via roller pressing;
(d) subsequently applying heat via a heat source in the presence of vacuum to said lamination film disposed on said surface of the porous substrate;
(e) thereby increasing the temperature of said lamination film to a temperature in the range of at least 5° C greater than the melting point temperature of the outer adhesive polymer layer, wherein said outer adhesive polymer layer is molten and penetrates into the tufted substrate;
(f) thereby forming a composite structure;
(g) roller pressing said composite structure thereby forming a pressed composite structure;
(h) removing heat from said pressed composite structure while applying vacuum;
(i) thereby forming said laminated substrate.

2. The process of claim 1, further comprising adhering a second substrate to the thermoplastic film wherein the second substrate comprises at least one of a film, a foam, a modifiable film which is a film that is expandable and/or crosslinkable, and a crosslinkable foam, and wherein the second substrate is at least 1 mm thick.

3. The process of claim 1, wherein the heat source comprises at least one of infrared heating, microwave heating, convective heating, conductive heating, radiant heating, and radio frequency heating.

4. The process of claim 1 wherein the lamination film comprises at least two layers.

5. The process of claim 4, wherein the at least two layers are modifiable film layers, wherein modifiable film layers are films that are expandable and/or crosslinkable.

6. The process of claim 1, wherein the lamination film comprises a modifiable film wherein a modifiable film is a film that is expandable and/or crosslinkable.

7. The process of claim 6, wherein the modifiable film comprises an expandable film, the process further comprising expanding the expandable film.

8. The process of claim 1, wherein the tufted substrate comprises at least one of carpet and artificial turf.

9. The process of claim 8, wherein the laminated carpet or artificial turf has a tuft lock of at least 2 kg.

10. The process of claim 1 further comprising applying an aqueous dispersion layer between the tufted substrate and the lamination film wherein the aqueous dispersion layer comprises:
a thermoplastic resin which comprises an ethylene-based homopolymer, copolymer, interpolymer, or multi-block interpolymer, a propylene-based homopolymer, copolymer, interpolymer, or multi-block interpolymer, or combinations thereof;
water; and
optionally a dispersion stabilizing agent.
wherein the aqueous dispersion has an average volume diameter particle size from about 0.3 to about 8.0 microns.

11. The process of claim 10, wherein the aqueous dispersion further comprises at least one of an ethylene vinyl acetate copolymer, a styrene-butadiene copolymer, and an epoxy, an acrylic polymer, a urethane polymer, or monomers therefore.

## Patentansprüche

1. Ein Verfahren zum Laminieren eines porösen Substrats, bereitgestellt durch ein Tuftingherstellungsverfahren, wobei das Verfahren Folgendes beinhaltet:
(a) Auswählen eines porösen Substrats, das ein getuftetes Substrat beinhaltet,
(b) Auswählen einer Laminierungsfolie, beinhaltend eine äußere Polymerklebstoffschicht, wobei die äußere Polymerklebstoffschicht ein Homopolymer, Copolymer, Interpolymer oder Multiblockinterpolymer auf Ethylenbasis, ein Homopolymer, Copolymer, Interpolymer oder Multiblockinterpolymer auf Propylenbasis oder Kombinationen davon beinhaltet und wobei die äußere Polymerklebstoffschicht eine Schmelzpunkttemperatur von weniger als der Schmelzpunkttemperatur des porösen Substrats aufweist;
(c) Aufbringen der Laminierungsfolie, beinhaltend die äußere Polymerklebstoffschicht, auf eine Oberfläche des porösen Substrats mittels Walzenpressen;
(d) anschließendes Anwenden von Wärme auf die Laminierungsfolie, die auf der Oberfläche des porösen Substrats aufgebracht ist, mittels einer Wärmequelle in Gegenwart eines Vakuums;
(e) dadurch Erhöhen der Temperatur der Laminierungsfolie auf eine Temperatur im Bereich von mindestens 5 °C mehr als die Schmelzpunkttemperatur der äußeren Polymerklebstoffschicht, wobei die äußere Polymerklebstoffschicht geschmolzen wird und in das getuftete Substrat eindringt;
(f) dadurch Bilden einer Verbundmaterialstruktur;
(g) Walzenpressen der Verbundmaterialstruktur, dadurch Bilden einer gepressten Verbundmaterialstruktur;
(h) Abführen von Wärme aus der gepressten Verbundmaterialstruktur unter Anlegen eines Vakuums;
(i) dadurch Bilden des laminierten Substrats.

2. Verfahren gemäß Anspruch 1, ferner beinhaltend das Ankleben eines zweiten Substrats an die thermoplastische Folie, wobei das zweite Substrat mindestens eines von einer Folie, einem Schaumstoff, einer modifizierbaren Folie, die ein Folie ist, die expandierbar und/oder vernetzbar ist, und einem vernetzbaren Schaumstoff ist und wobei das zweite Substrat mindestens 1 mm dick ist.

3. Verfahren gemäß Anspruch 1, wobei die Wärmequelle mindestens eine von Infrarotheizung, Mikrowellenheizung, Konvektionsheizung, Konduktionsheizung, Strahlungsheizung und Hochfrequenzheizung beinhaltet.

4. Verfahren gemäß Anspruch 1, wobei die Laminierungsfolie mindestens zwei Schichten beinhaltet.

5. Verfahren gemäß Anspruch 4, wobei die mindestens zwei Schichten modifizierbare Folienschichten sind, wobei modifizierbare Folienschichten Folien sind, die expandierbar und/oder vernetzbar sind.

6. Verfahren gemäß Anspruch 1, wobei die Laminierungsfolie eine modifizierbare Folie beinhaltet, wobei eine modifizierbare Folie eine Folie ist, die expandierbar und/oder vernetzbar ist.

7. Verfahren gemäß Anspruch 6, wobei die modifizierbare Folie eine expandierbare Folie beinhaltet, wobei das Verfahren ferner das Expandieren der expandierbaren Folie beinhaltet.

8. Verfahren gemäß Anspruch 1,wobei das getuftete Substrat mindestens einen von Teppich und Kunstrasen beinhaltet.

9. Verfahren gemäß Anspruch 8, wobei der laminierte Teppich oder Kunstrasen eine Reißfestigkeit (tuft lock) von mindestens 2 kg aufweist.

10. Verfahren gemäß Anspruch 1, ferner beinhaltend das Auftragen einer wässrigen Dispersionsschicht zwischen das getuftete Substrat und die Laminierungsfolie, wobei die wässrige Dispersionsschicht Folgendes beinhaltet:
ein thermoplastisches Harz, das ein Homopolymer, Copolymer, Interpolymer oder Multiblockinterpolymer auf Ethylenbasis, ein Homopolymer, Copolymer, Interpolymer oder Multiblockinterpolymer auf Propylenbasis oder Kombinationen davon beinhaltet; Wasser; und
wahlweise ein Dispersionsstabilisierungsmittel,
wobei die wässrige Dispersion einen volumengemittelten Teilchengrößendurchmesser von etwa 0,3 bis etwa 8,0 Mikrometer aufweist.

11. Verfahren gemäß Anspruch 10, wobei die wässrige Dispersion ferner mindestens eines von einem Ethylen-Vinylacetat-Copolymer, einem Styrol-Butadien-Copolymer und einem Epoxid, einem Acrylpolymer, einem Urethanpolymer oder Monomeren davon beinhaltet.

## Revendications

1. Un procédé de lamination d'un substrat poreux fourni à partir d'un procédé de fabrication par touffetage, le procédé comprenant :
(a) le fait de sélectionner un substrat poreux comprenant un substrat touffeté,
(b) le fait de sélectionner un film de lamination comprenant une couche de polymère adhésive externe, dans lequel ladite couche de polymère adhésive externe comprend un homopolymère, copolymère, interpolymère, ou interpolymère multibloc à base d'éthylène, un homopolymère, copolymère, interpolymère, ou interpolymère multibloc à base de propylène, ou des combinaisons de ceux-ci, et dans lequel ladite couche de polymère adhésive externe a une température de point de fusion inférieure à la température de point de fusion du substrat poreux ;
(c) le fait de disposer ledit film de lamination comprenant ladite couche de polymère adhésive externe sur une surface dudit substrat poreux par le biais d'un pressage par rouleau ;
(d) le fait d'appliquer subséquemment de la chaleur par le biais d'une source de chaleur en présence de vide sur ledit film de lamination disposé sur ladite surface du substrat poreux ;
(e) élevant ainsi la température dudit film de lamination jusqu'à une température dans l'intervalle d'au moins 5 °C au-dessus de la température de point de fusion de la couche de polymère adhésive externe, ladite couche de polymère adhésive externe étant fondue et pénétrant dans le substrat touffeté ;
(f) formant ainsi une structure composite ;
(g) le fait de presser par rouleau ladite structure composite, formant ainsi une structure composite pressée ;
(h) le fait de retirer la chaleur de ladite structure composite pressée tout en appliquant un vide ;
(i) formant ainsi ledit substrat laminé.

2. Le procédé de la revendication 1, comprenant en outre le fait de faire adhérer un deuxième substrat sur le film thermoplastique le deuxième substrat comprenant au moins un élément parmi un film, une mousse, un film modifiable qui est un film qui est extensible et/ou réticulable, et une mousse réticulable, et le deuxième substrat ayant au moins 1 mm d'épaisseur.

3. Le procédé de la revendication 1, dans lequel la source de chaleur comprend au moins un chauffage parmi un chauffage par infrarouge, un chauffage par micro-ondes, un chauffage par convection, un chauffage par conduction, un chauffage par rayonnement, et un chauffage par radiofréquence.

4. Le procédé de la revendication 1 dans lequel le film de lamination comprend au moins deux couches.

5. Le procédé de la revendication 4, dans lequel les au moins deux couches sont des couches de films modifiables, les couches de films modifiables étant des films qui sont extensibles et/ou réticulables.

6. Le procédé de la revendication 1, dans lequel le film de lamination comprend un film modifiable, un film modifiable étant un film qui est extensible et/ou réticulable.

7. Le procédé de la revendication 6, dans lequel le film modifiable comprend un film extensible, le procédé comprenant en outre le fait d'étendre le film extensible.

8. Le procédé de la revendication 1, dans lequel le substrat touffeté comprend au moins un élément parmi de la moquette et du gazon artificiel.

9. Le procédé de la revendication 8, dans lequel la moquette ou le gazon artificiel laminé a une fixation du touffetage d'au moins 2 kg.

10. Le procédé de la revendication 1 comprenant en outre le fait d'appliquer une couche de dispersion aqueuse entre le substrat touffeté et le film de lamination, la couche de dispersion aqueuse comprenant :
une résine thermoplastique qui comprend un homopolymère, copolymère, interpolymère, ou interpolymère multibloc à base d'éthylène, un homopolymère, copolymère, interpolymère, ou interpolymère multibloc à base de propylène, ou des combinaisons de ceux-ci ;
de l'eau ; et
facultativement un agent de stabilisation de dispersion,
dans lequel la dispersion aqueuse a une taille de particule de diamètre moyen en volume allant d'environ 0,3 à environ 8,0 microns.

11. Le procédé de la revendication 10, dans lequel la dispersion aqueuse comprend en outre au moins un élément parmi un copolymère d'acétate de vinyle-éthylène, un copolymère de styrène butadiène, et un époxy, un polymère acrylique, un polymère uréthane, ou des monomères de ceux-ci.
